# FASCICULE DE BREVET EUROPEEN

(11) **EP 2 351 192 B1**
(45) Date de publication et mention de la délivrance du brevet: **28.02.2018**
(21) Numéro de dépôt: 09755945.4
(22) Date de dépôt: 01.10.2009
(51) Int. Cl.: H02K 5/14, H02K 5/18, H02K 11/04, H02K 19/36

(54) **ENSEMBLE REGULATEUR DE TENSION PORTE-BALAIS POUR MACHINE ELECTRIQUE TOURNANTE ET MACHINE ELECTRIQUE TOURNANTE COMPORTANT UN TEL ENSEMBLE**
SPANNUNGSREGLER- UND BÜRSTENHALTERSYSTEM FÜR DREHENDE ELEKTRISCHE MASCHINEN UND DREHENDE ELEKTRISCHE MASCHINE FÜR EIN SOLCHES SYSTEM
VOLTAGE REGULATOR AND BRUSH HOLDER ASSEMBLY FOR A ROTATING ELECTRIC MACHINE AND ROTATING ELECTRIC MACHINE INCLUDING SUCH AN ASSEMBLY

(30) Priorité: 02.10.2008 FR 0856662
(43) Date de publication de la demande: 03.08.2011
(73) Titulaire: Valeo Equipements Electriques Moteur, 94046 Créteil Cedex (FR)
(72) Inventeur: TISSERAND, Pierre, F-94450 Limeil Brevannes (FR); STOFLETH, Karine, F-94700 Maisons Alfort (FR); TRAMET, Guillaume, F-78180 Montigny le Bretonneux (FR); SERDIN, Claire, F-94240 L'Hay les Roses (FR); CHASSARD, Pierre, F-94000 Creteil (FR); PORTE, Christophe, F-75002 Paris (FR); DUGUE, Christophe, F-91120 Palaiseau (FR); SEIDENBINDER, Régis, F-94600 Choisy le Roi (FR)
(74) Mandataire: de Lambilly Delorme, Marie Pierre
(86) Numéro de dépôt international: PCT/FR2009/051867
(87) Numéro de publication internationale: WO 2010/037976

(56) Documents cités:
- EP-A- 1 058 369
- WO-A-2005/064773
- US-A1- 2002 050 750
- US-A1- 2007 102 931

## Description

### Domaine de l'invention

La présente invention concerne un ensemble régulateur de tension- porte balais pour machine électrique tournante polyphasée, notamment un alternateur ou un alterno-démarreur de véhicule automobile, et une machine électrique tournante comportant un tel ensemble.

### Etat de la technique

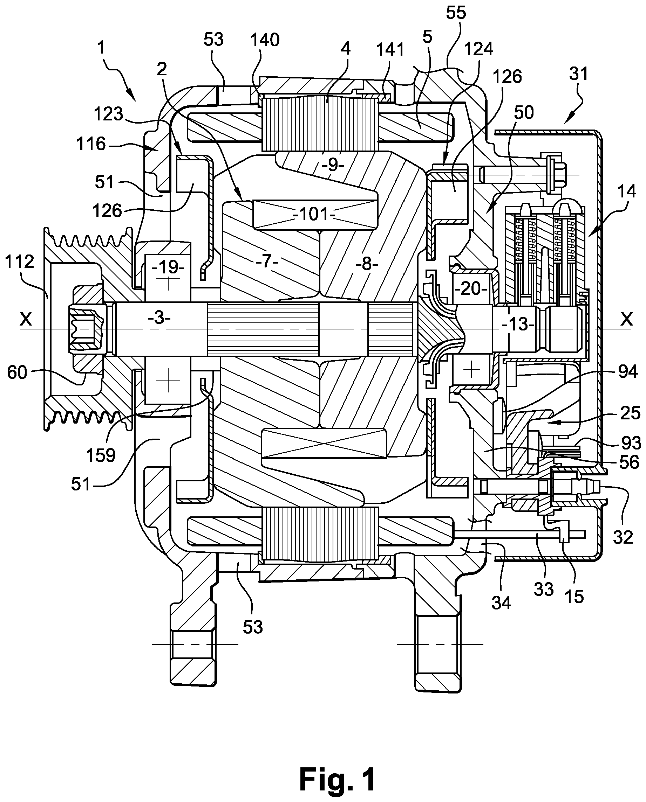

De nombreuses machines électriques tournantes sont équipées d'un dispositif de redressement de courant et d'un ensemble régulateur de tension -porte balais.
Par exemple à la figure 1, on décrit ci-après une telle machine sous la forme d'un alternateur compact et polyphasé, notamment pour véhicule automobile. Cet alternateur, ici à ventilation interne, transforme de l'énergie mécanique en énergie électrique.

Cette machine comporte essentiellement un carter 1 et, à l'intérieur de celui-ci, un rotor 2 solidaire en rotation d'un arbre 3, et un stator polyphasé 4, qui entoure le rotor avec présence d'un faible entrefer et qui comporte un corps en forme d'un paquet de tôles doté d'encoches, ici du type semi fermé, équipées d'isolant d'encoches pour le montage du bobinage des phases du stator, comportant chacune au moins un enroulement formant de part et d'autre du corps du stator un chignon 5.

Les enroulements du bobinage sont obtenus par exemple à partir d'un fil continu recouvert d'émail ou à partir d'éléments conducteurs en forme de barre recouverts d'émail, tels que des épingles reliées entre elles par exemple par soudage.

Ces enroulements sont par exemple des enroulements triphasés connectés en étoile ou en triangle, dont les sorties 33 sont reliées à des entrées 15 appartenant à un dispositif de redressement de courant 25 comportant des éléments de redressement de courant 93, 94, tels que des diodes ou des transistors du type MOSFET appartenant à au moins un pont redresseur.

Le nombre de phases dépend des applications et peut être supérieur à trois comme décrit par exemple dans le document WO 03/009452, un ou deux ponts redresseurs pouvant être prévus.
Le rotor de la figure 1 est un rotor à griffes 2. Il comporte deux roues polaires 7, 8 axialement juxtaposées et de forme annulaire présentant chacune un flasque transversal pourvu à sa périphérie externe de dents 9 de forme trapézoïdale dirigées axialement vers le flasque de l'autre roue polaire, la dent d'une roue polaire pénétrant dans l'espace existant entre deux dents 9 adjacentes de l'autre roue polaire. Le nombre de dents 9 dépend des applications et notamment du nombre de phases du stator. Dans un mode de réalisation il est prévu huit dents par roue polaire. En variante chaque roue polaire comporte six ou sept dents.
Ici la solidarisation de l'arbre 3 avec les roues polaires 7,8 est réalisée par emmanchement à force de l'arbre 3 plus dur dans les alésages des roues 7, 8, l'arbre 3 présentant pour ce faire des portions moletées.
Un noyau cylindrique, ici en deux parties, est intercalé axialement entre les flasques des roues 7,8.
Ce noyau porte à sa périphérie externe un bobinage d'excitation 101.

L'arbre 3 du rotor 2 porte à son extrémité avant un organe d'entraînement, tel qu'une une poulie 112 appartenant à un dispositif de transmission de mouvements à au mois une courroie entre l'alternateur et le moteur thermique du véhicule automobile, et à son extrémité arrière 13, de diamètre réduit, des bagues collectrices reliées par des liaisons filaires aux extrémités du bobinage d'excitation du rotor. Les liaisons filaires et les bagues collectrices appartiennent ici à un collecteur rapporté du type de celui décrit dans le document FR 2 710 197. Des balais (non référencées) appartiennent à un porte-balais et sont disposés de façon à frotter sur les bagues collectrices. Le porte-balais est relié à un régulateur de tension pour former avec celui-ci un ensemble régulateur de tension -porte balais 14. Le régulateur de tension régule la tension de l'alternateur afin de protéger les consommateurs et de recharger la batterie à la bonne tension.

Dans tous les cas lorsque le bobinage d'excitation 101 est alimenté électriquement via ou sans les balais, le rotor 2, en matériau ferromagnétique, est magnétisé et devient un rotor inducteur avec formation de pôles magnétiques au niveau des dents des roues polaires.

Ce rotor inducteur crée un courant induit alternatif dans le stator induit lorsque l'arbre 3 tourne, le ou les ponts redresseurs du dispositif de redressement de courant 25 permettant de transformer le courant alternatif induit en un courant continu, notamment pour alimenter les charges et les consommateurs du réseau de bord du véhicule automobile, ainsi que pour recharger la batterie dudit véhicule.

Dans la figure 1, le carter 1 porte intérieurement à sa périphérie externe le corps du stator 4 et centralement à rotation l'arbre 3. Ce carter est ici en deux parties, à savoir un flasque avant 116 adjacent à la poulie 112 et un flasque arrière 50 doté d'un fond 56 portant l'ensemble 14 monobloc porte-balais- régulateur de tension et au moins un pont redresseur du dispositif de redressement de courant 25.

En variante c'est le flasque avant qui porte l'ensemble monobloc régulateur de tension- porte balais et au moins un pont redresseur du dispositif de redressement de courant 25.

Dans ces deux formes de réalisation il est prévu un capot de protection ajouré entourant le régulateur de tension et le dispositif de redressement de courant 25. Ce capot est référencé en 31 à la figure 1 et comporte un fond doté d'ouvertures comme mieux visible dans les figures 6 et 8 du document WO 03/009452.

Les flasques 116 et 50 sont appelés de manière conventionnelle respectivement palier avant 116 et palier arrière 50. Ces paliers 116, 50 sont ici de forme creuse et métallique en étant par exemple à base d'aluminium ce qui permet d'obtenir par moulage la forme voulue. Ces paliers sont reliés électriquement à la masse du véhicule via des pattes non référencées qu'ils comportent pour fixation de l'alternateur à une partie fixe du véhicule. Ils portent chacun centralement un roulement à billes respectivement 19 et 20 pour le montage à rotation de l'arbre 3 du rotor 2. Une entretoise 159 est intercalé ici entre le rotor 2 et le roulement 19 de diamètre supérieur à celui du roulement 20.

A la figure 1, il est prévu à la périphérie externe du corps du stator 4 un système élastique pour filtrer les vibrations, avec à l'avant un joint plat 140 et à l'arrière des tampons 141, de la résine souple et thermoconductrice étant intercalée entre le palier avant et le corps du stator pour évacuer la chaleur. En variante les paliers 116, 50 portent rigidement le corps du stator 4.

On notera que l'axe X-X de symétrie axiale de l'arbre 3 constitue également l'axe de symétrie axiale du rotor 2 et l'axe de rotation de l'alternateur.

Les paliers 116 et 50, globalement de forme annulaire, comportent un fond 56, globalement d'orientation axiale par rapport à l'axe X-X.

Ce fond 56 est prolongé à sa périphérie externe par une jupe 55 annulaire globalement d'orientation axiale par rapport à l'axe X-X.

Les fonds et les jupes des paliers sont, dans la figure 1, dotées d'ouvertures 51, 53 respectivement d'entrée et de sortie pour permettre le refroidissement de l'alternateur par circulation d'air.

A cette fin, le rotor 2 porte au moins à l'une de ses extrémités axiales un ventilateur destiné à assurer cette circulation de l'air. Dans l'exemple représenté, un ventilateur avant 123 est prévu sur la face frontale avant du rotor et un ventilateur arrière 124, plus puissant, sur la face dorsale arrière du rotor. Chaque ventilateur est pourvu d'une pluralité de pales 126.

Le fond 56 du palier 50 présente également des ouvertures 34 pour le passage des sorties 33 des phases.

Ce fond 56 est également taraudé localement pour le vissage de goujons 32 de fixation du capot traversant le dispositif 25.
Plus précisément le capot 31 entoure le dispositif 25 et l'ensemble régulateur de tension-porte balais 14. Il se monte par encliquetage sur l'extrémité filetée des goujons 32. Pour ce faire, de manière connue, le capot 31 en matière plastique comporte une cheminée (non référencée à la figure 1) associée à chaque goujon 32. Chaque cheminée présente intérieurement, des pattes élastiquement déformables destinées à venir en prise par encliquetage avec l'extrémité filetée du goujon 32.

Dans les documents WO 03/009452 et FR 2 744 575 précités le dispositif de redressement de courant comporte des diodes qui sont dotées d'une embase, appelée culot, comportant une partie principale massive prolongée axialement par un socle présentant à son extrémité libre une face de fixation pour un élément semi conducteur intercalé entre le socle et la tête d'un élément de connexion en forme de fil rigide appelé queue de diode ou axe de la diode. De la résine enrobe la tête de la queue de la diode et l'élément semi conducteur. Cette résine est solidaire du culot de la diode.

Le dispositif de redressement de courant, porté par le palier arrière ou en variante le palier avant, comporte :
- une pluralité de diodes positives supportées par un support positif ;
- une pluralité de diodes négatives supportées par le fond du palier ;
- un connecteur pour relier les queues des diodes au sorties des phases du stator.

Les diodes constituent des éléments de redressement de courant.

Dans un autre mode de réalisation sont remplacées par des transistors du type MOSFET.

Le support positif et le palier sont métalliques, tandis que le connecteur comporte un corps en matière plastique dans lequel sont noyées des traces électriquement conductrices dénudées par endroit pour réaliser notamment les liaisons électriques avec les queues des diodes positives et négatives.

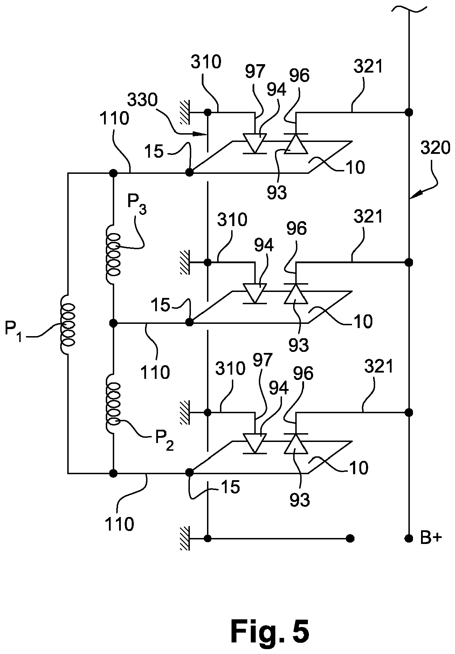

Comme visible notamment à la figure 5 de ce document WO 03/009452 les diodes s'étendent parallèlement à l'axe de l'alternateur et le connecteur est implanté radialement au dessus du support positif porté à isolation électrique par le palier arrière.

Cet agencement donne satisfaction.

Dans d'autre réalisations on monte les éléments de redressement de courant d'une phase de la machine électrique sur un même support destiné à être relié à la sortie de la phase concernée pour formation d'un module de redressement de courant de la phase.

Un tel module est décrit dans le document FR 2 729 802, les diodes ne comportent pas de queues.

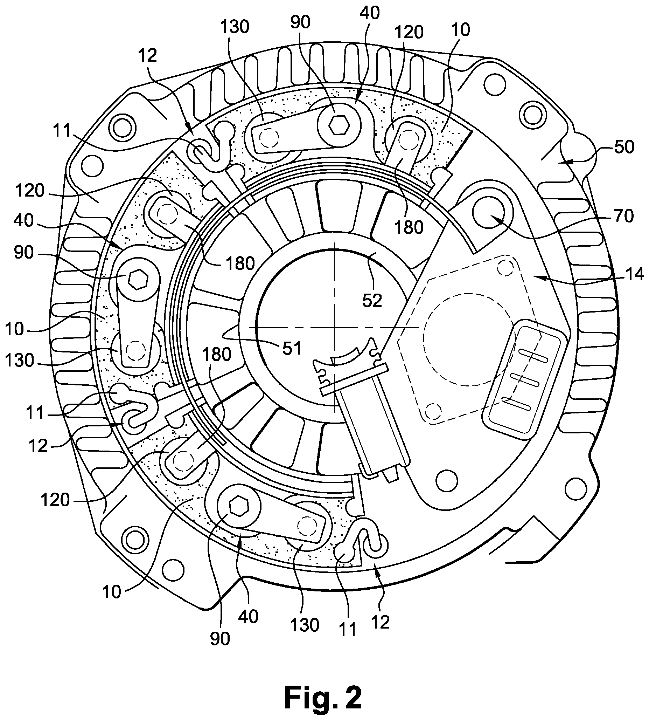

Comme visible à la figure 2 qui est une vue de face d'un agencement de redressement pour un alternateur de véhicule automobile sans le capot de l'alternateur, on a proposé dans ce document de monter les diodes positives 120 et les diodes négatives 130 sur des plaquettes de refroidissement 10 constituant le support commun des diodes d'une même phase destiné à être relié à la sortie de la phase concernée. L'ensemble forme un module de redressement de courant d'une phase.

Dans cette figure 2 ont voit en 50 le palier arrière de l'alternateur, en 40 des pièces électriquement isolantes pour isoler les plaquettes 10 du palier 50, en 70 la borne positive, dite borne B+, de l'alternateur, qui correspond à la sortie redressée de l'alternateur destinée à être reliée via un câble à la borne positive de la batterie, en 180 des languettes, en 90 les vis de fixation des plaquettes 10 sur le fond du palier 50, en 14 l'ensemble régulateur de tension- porte-balais , en 51 les ouvertures de passage de l'air et en 52 l'âme cylindrique délimitant intérieurement les ouvertures 51.

Chaque plaquette 10 est connectée via une liaison 11 à l'une des sorties de phase du bobinage du stator et est en contact avec l'anode de la diode positive 120, qu'elle porte, ainsi qu'avec la cathode de sa diode négative 130.

La liaison 11 traverse la plaquette 10 à la faveur d'un orifice 12 de celle-ci.

Pour plus de précisions on se reportera à ce document FR 2 729 802.

Cette disposition permet de laisser libre les ouvertures de passage d'air et de créer des modules sous la forme de plaquettes portant les diodes positives et négatives.

Dans les deux solutions les ensembles régulateur de tension- porte balais sont implantés à la faveur du dégagement que présente le dispositif de redressement de courant entre ces extrémités circonférentielles, comme visible par exemple à la figure 2.

Un problème se pose dans ces modes de réalisation précités car l'alternateur est implanté sous le capot moteur au voisinage du moteur thermique du véhicule automobile.

En effet compte tenu de l'évolution des moteurs thermiques des véhicules de plus en plus confinés, la température ambiante sous le capot moteur augmente de plus en plus.

Dans certains cas cette température ambiante peut atteindre 140°C.

Il est donc souhaitable de pouvoir adapter ces régulateurs de tension monoblocs avec le porte balais à ces températures plus élevées.

Il est également souhaitable d'augmenter la puissance de la machine électrique tournante.

Le même problème se pose lorsque le moteur thermique est fixe et est confiné à l'intérieur d'un compartiment.

Dans le document US 2007/0102931, conforme au préambule de la revendication 1, l'ensemble régulateur de tension- porte balais comporte un corps en matière électriquement isolante configuré pour présenter un manchon portant en saillie radiale à l'une de ses extrémité circonférentielle le porte-balais prolongé circonférentiellement d'un côté par une partie portant un circuit intégré et troué pour passage de l'air. Cet ensemble est circonférentiellement encombrant. Il est souhaitable de réduire l'encombrement circonférentiel pour que celui-ci puisse se loger dans dégagement plus réduit que présente le dispositif de redressement de courant entre ces extrémités circonférentielles.

### Objet de l'invention

La présente invention a pour objet de répondre à ces souhaits.

Un but de l'invention objet de créer un régulateur de tension bien refroidi. Suivant l'invention un ensemble monobloc régulateur de tension- porte balais du type sus-indiqué, est caractérisé par la partie caractérisante de la revendication 1.

Suivant l'invention une machine électrique tournante polyphasée est caractérisée en ce qu'elle est équipée d'un palier portant à fixation un tel ensemble régulateur de tension- porte balais.
Grâce à l'invention le régulateur de tension est bien refroidi. en sorte que la machine électrique tournante peut travailler à des températures plus élevées sachant que des températures élevées sont plus critiques pour le régulateur de tension que pour le dispositif de redressement de courant.
Suivant d'autres caractéristiques prises isolément ou en combinaison :
- le palier présente un fond globalement d'orientation transversale, qui porte un dispositif de redressement de courant comprenant au moins deux modules de redressement de courant chacun d'une phase de la machine ;
- ledit dispositif comporte un boîtier en matière électriquement isolante et ajouré axialement ;
- le boîtier est doté d'une pluralité de logements transversaux dont deux au moins sont dédiés à la réception d'un module de redressement de courant (100);
- le boîtier présente deux extrémités circonférentielles cloisonnées délimitant un dégagement pour le logement de ensemble régulateur de tension- porte balais et d'une borne de liaison avec la borne positive d'une batterie ;
- le dégagement comporte une ouverture centrale du boîtier communiquant avec un passage entre les extrémités circonférentielles du boîtier ;
- le dispositif de redressement de courant s'étend circonférentiellement sur plus de 180° ;
- le régulateur de tension comporte un corps monté dans le dégagement et comportant une partie portant un dissipateur de chaleur ;
- le corps s'engage dans l'ouverture centrale (du boîtier pour porter le porte balais ;
- les ailettes du dissipateur sont implantées dans le passage et sont de longueur inégale;
- le dispositif de redressement de courant s'étend circonférentiellement globalement sur 270° et le passage circonférentiellement globalement sur 90°.

D'autres avantages apparaîtront à lumière de la description qui va suivre et en référence aux dessins annexés.

### Brève description des dessins

- la figure 1 est une vue en coupe axiale d'une machine électrique tournante de l'état de la technique ;
- la figure 2 est une vue face d'un agencement de redressement de courant selon la demande FR 2 729 802;

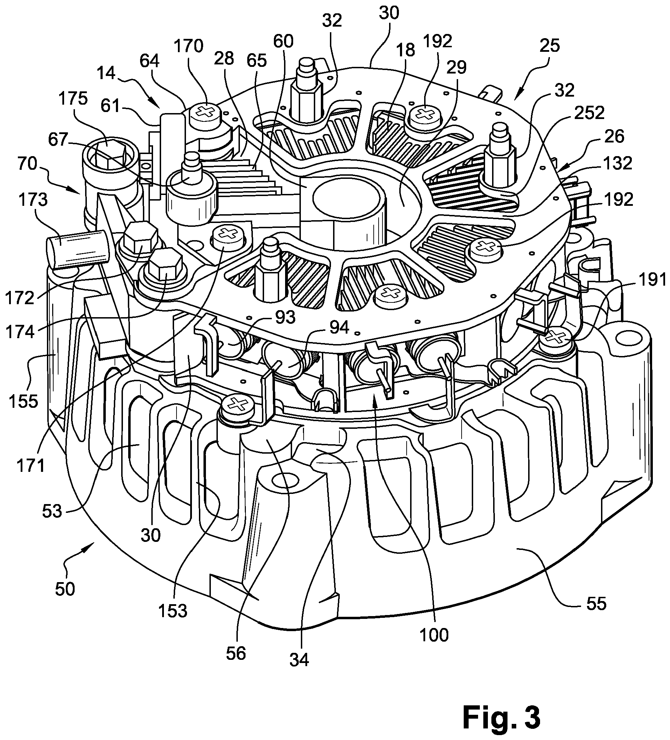

- la figure 3 est une vue en perspective du flasque arrière, appelé palier arrière, de la figure 1 équipé d'un dispositif de redressement de courant selon l'invention pour formation d'un ensemble unitaire appelé agencement de redressement de courant;

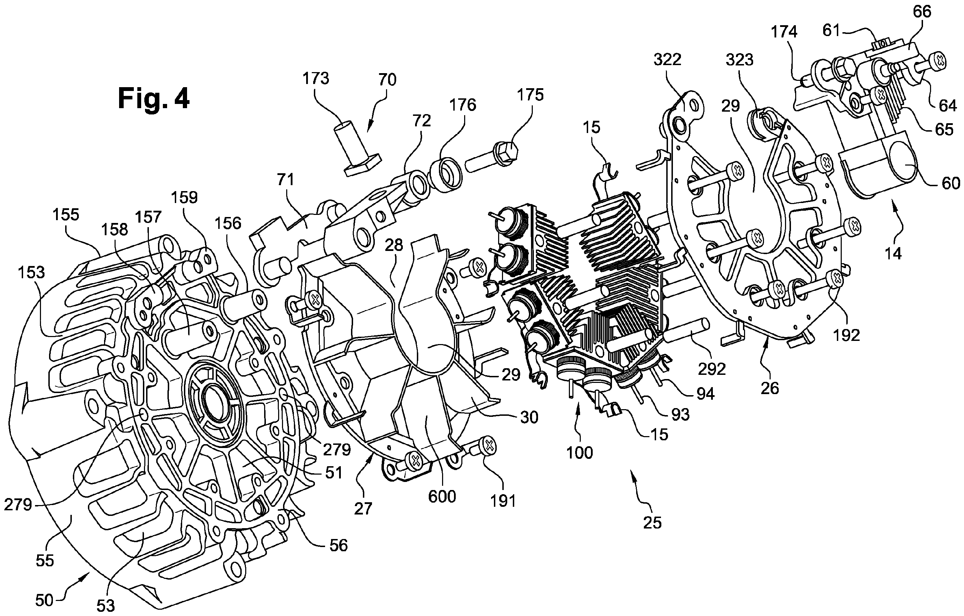

- la figure 4 est une vue en éclaté de la figure 3 ;
- la figure 5 est une vue schématique d'une partie du circuit électrique du dispositif de redressement de courant des figures 3 et 4;

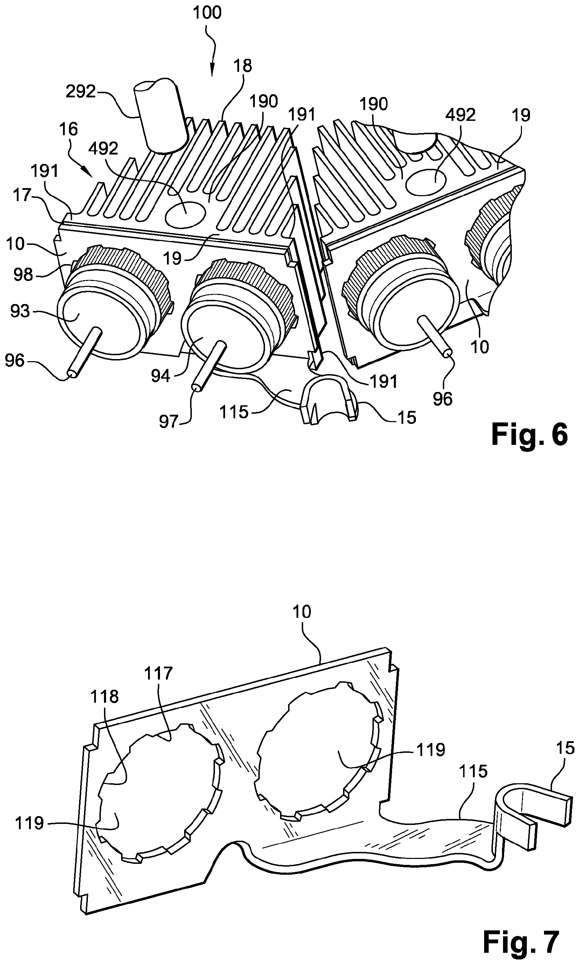

- la figure 6 est une vue partielle de deux des modules de redressement de courant de la figure 4;
- la figure 7 est une vue en perspective d'une plaque d'un module de redressement de courant d'une phase de la machine électrique tournante ;

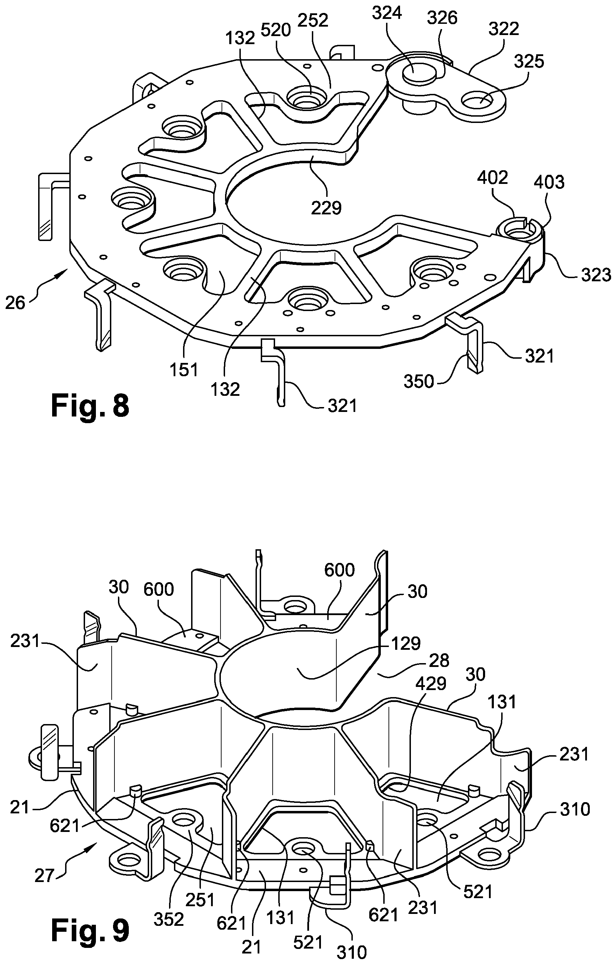

- la figure 8 est une vue en perspective montrant le connecteur supérieur du boîtier que comporte le dispositif de redressement de courant;
- la figure 9 est une vue en perspective montrant le connecteur inférieur du boîtier que comporte le dispositif de redressement de courant;

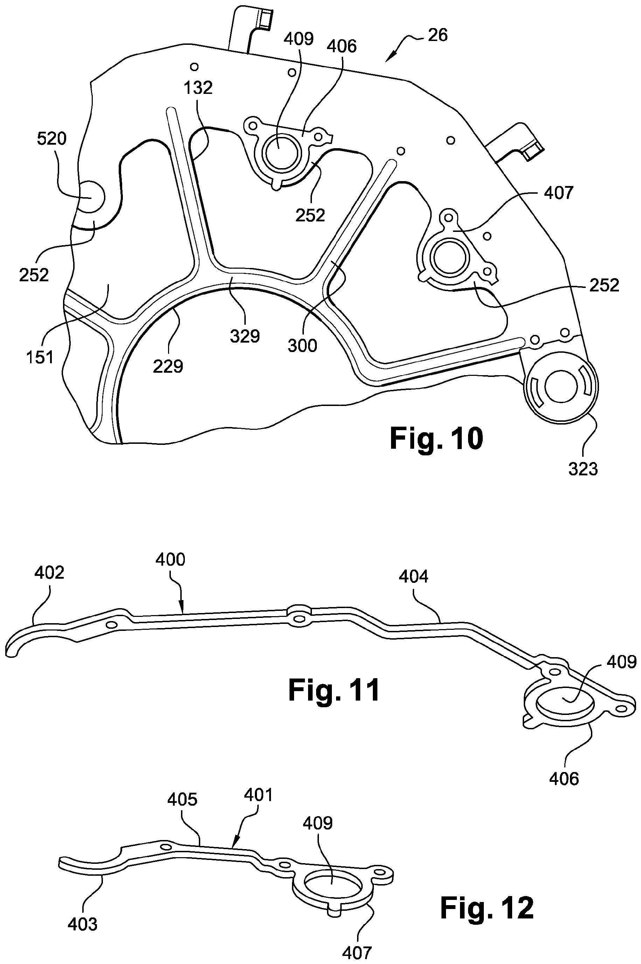

- la figure 10 est une vue partielle de dessous du connecteur supérieur de la figure 8 ;
- la figure 11 est une vue en perspective d'une première trace de régulateur noyée en majeure partie dans le connecteur supérieur ;
- la figure 12 est une vue en perspective d'une deuxième trace de régulateur plus courte noyée en majeure partie dans le connecteur supérieur ;

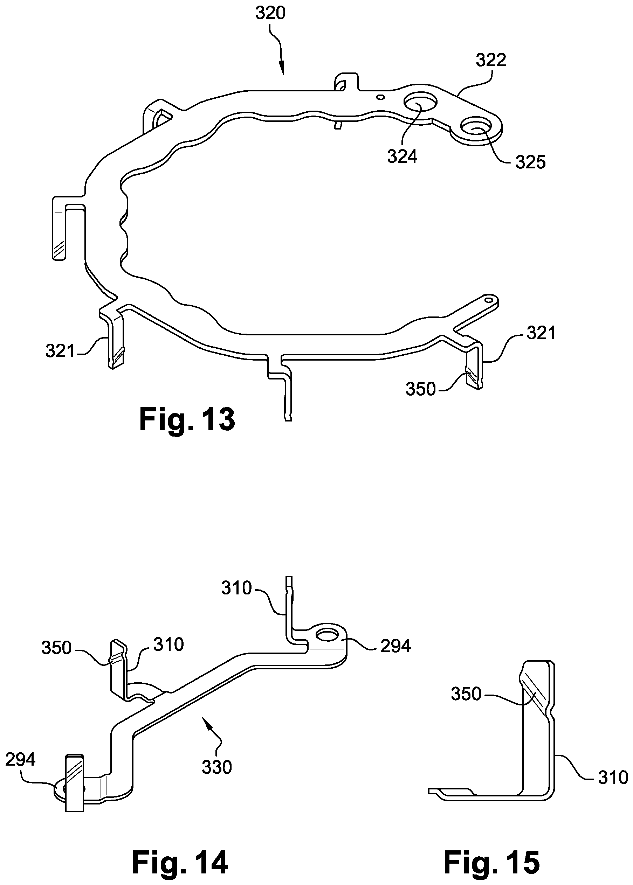

- la figure 13 est une vue en perspective d'une trace supérieure en arc de cercle noyée en majeure partie dans le connecteur supérieur et appartenant à la troisième liaison électrique entre la borne B+ et les éléments de redressement positifs du dispositif de redressement de courant ;
- la figure 14 est une vue en perspective de l'une des deux traces inférieures noyée en majeure partie dans le connecteur inférieure et appartenant à la première liaison électrique entre la masse et les éléments de redressement négatifs du dispositif de redressement de courant ;
- la figure 15 est une vue partielle à plus grande échelle de la figure 14 montrant un des bras solidaire de la trace inférieure ;

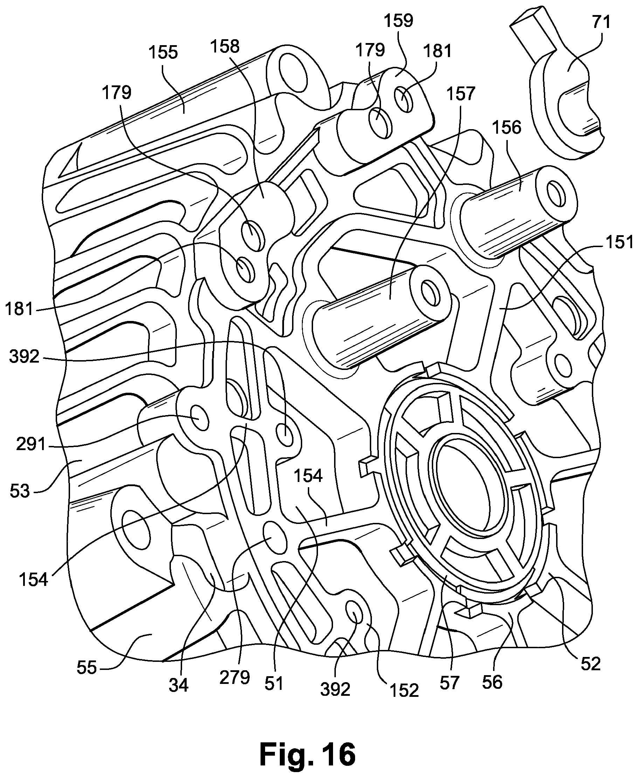

- la figure 16 est une vue partielle de la figure 4 montrant en perspective une partie du palier arrière;

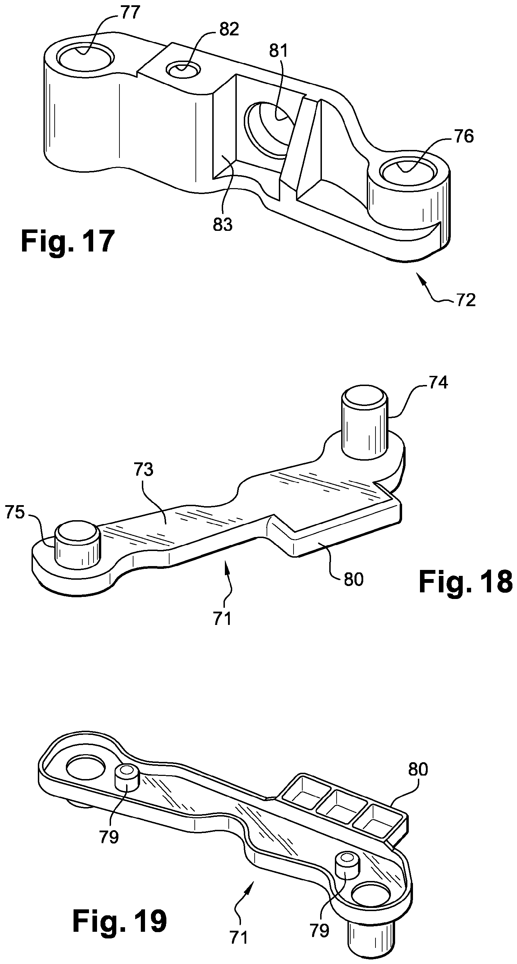

- la figure 17 est une vue en perspective d'un corps électriquement conducteur de la borne positive B+ ;
- la figure 18 est une vue en perspective du support électriquement isolant du corps de la borne B+;
- la figure 19 est une vue de dessous en perspective du support électriquement isolant de la figure 18 ;

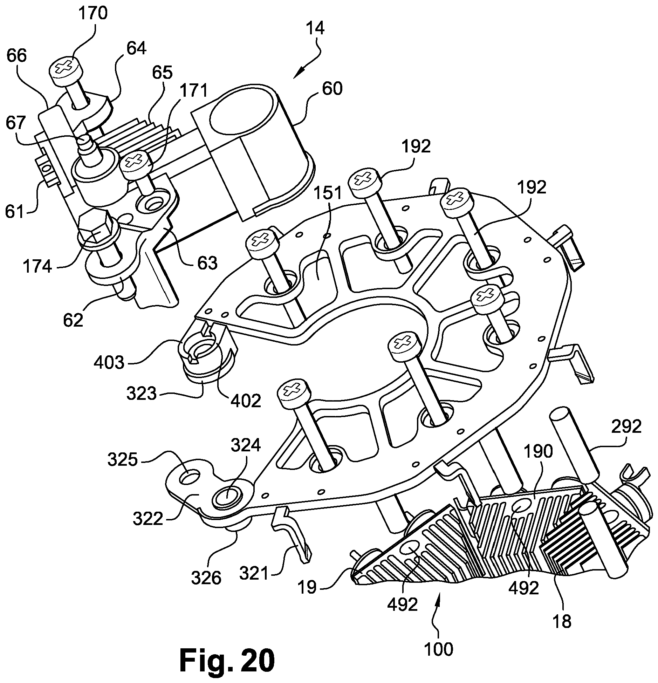

- la figure 20 est une vue partielle de la figure 4 montrant, en perspective et à plus grande échelle, le régulateur de tension, le connecteur supérieur et une partie des modules de redressement de courant ;

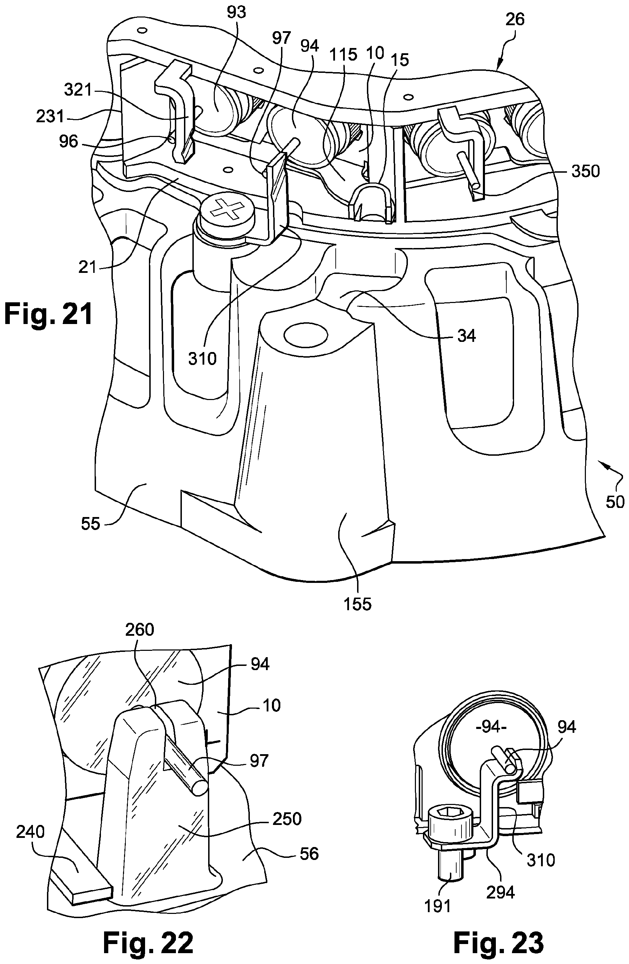

- la figure 21 est une vue partielle de la figure 4 montrant, en perspective et à plus grande échelle, le montage de l'un des modules de redressement de courant ;
- la figure 22 est une vue partielle en perspective d'une variante de liaison d'une queue de diode négative avec la masse ;
- la figure 23 est une vue analogue à la figure 22 pour encore un autre mode de réalisation ;

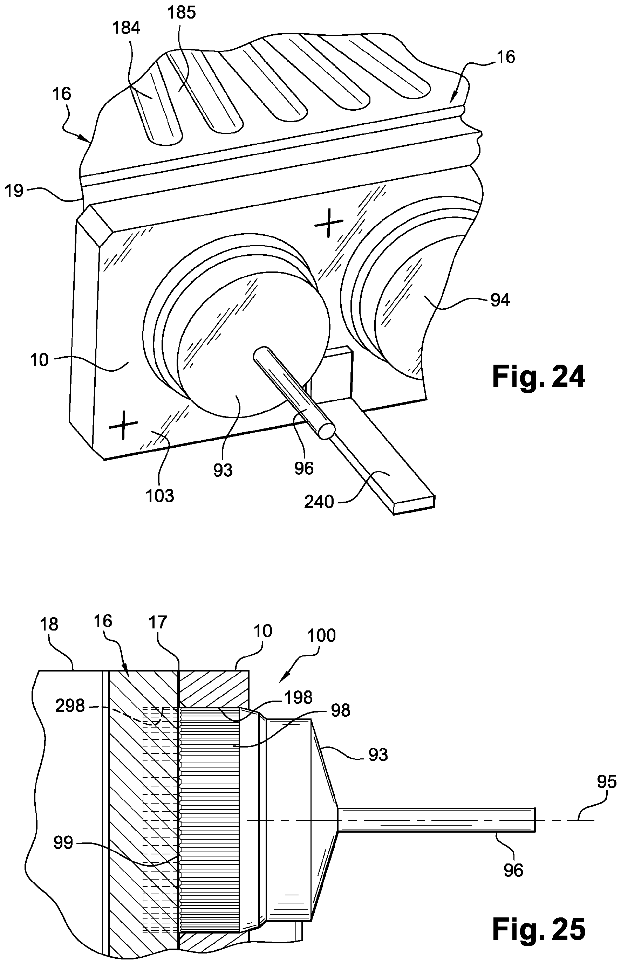

- la figure 24 est une vue partielle en perspective d'une variante d'un module de redressement de courant ;
- la figure 25 est une vue partielle en coupe axiale d'une autre variante d'un module de redressement de courant ;

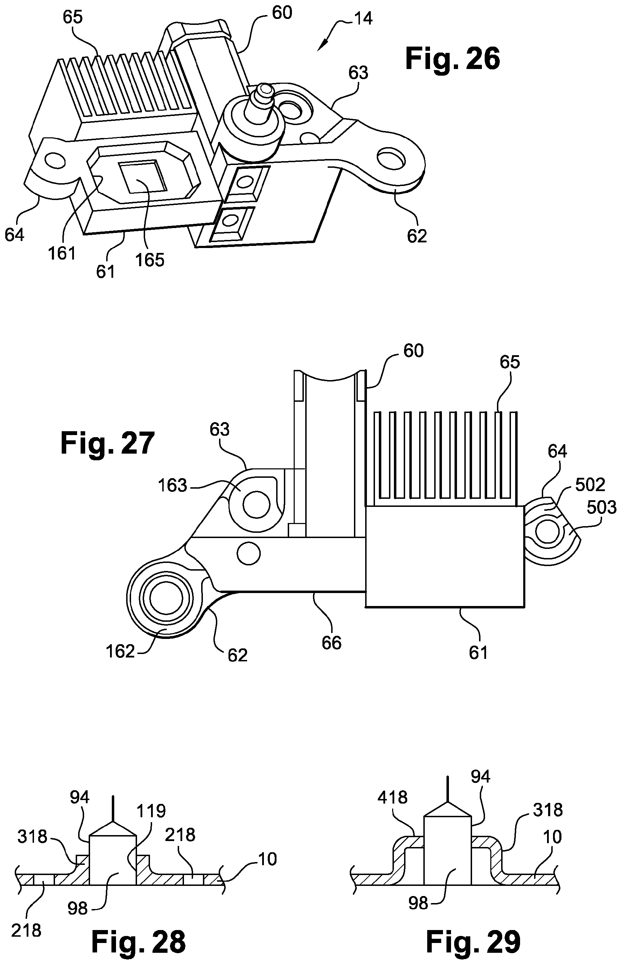

- la figure 26 est une vue en perspective de dessus de l'ensemble régulateur de tension -porte balais pour une variante de réalisation sans le circuit intégré du régulateur de tension ;
- la figure 27 est une vue de dessous en perspective de l'ensemble de la figure 26 ;
- la figure 28 est une vue partielle de la plaque du module équipée d'une diode avant son brasage sur l'embase du dissipateur pour une variante de réalisation ;
- la figure 29 est une vue partielle analogue à la figure 28 pour encore un autre mode de réalisation.

### Description de modes de réalisation de l'invention

Dans les figures les éléments identiques seront affectés des mêmes signes de référence et les orientations radiale, axiale et transversale seront faites en référence à l'axe X-X de la figure 1. Le terme dorsal désigne la face d'une pièce dirigée vers le fond 56 du palier 50 et le terme frontal la face d'une pièce dirigée en sens opposée au fond 56.

Dans les figures 3 et 4 on a représenté en perspective et à plus grande échelle le flasque arrière, appelé palier arrière 50, de la figure 1 modifié pour être équipé d'un ensemble 14 régulateur de tension porte balais selon l'invention associé à un dispositif de redressement de courant alternatif en courant continu 25 bien ventilé pour formation d'un ensemble unitaire, manipulable et transportable appelé agencement de redressement de courant. Dans cette figure les sorties 33 des phases de la figure 1 ne sont pas encore assemblées avec les entrées 15 du dispositif 25, ici sous la forme de pattes de sertissage.

Bien entendu, en variante, on peut monter le dispositif 25 sur le palier avant.

Suivant une caractéristique le dispositif de redressement de courant 25 comporte un boîtier 26, 27 compact en matière électriquement isolante et moulable.

Suivant une caractéristique ce boîtier est axialement ajouré pour passage d'un fluide de refroidissement, ici de l'air, et comporte une pluralité de logements transversaux. Certains au moins des logements transversaux sont dédiés à la réception d'au moins deux modules de redressement de courant.
Ce boîtier permet, de manière décrite ci-après, de réaliser plusieurs fonctions à considérer isolément et/ou en combinaison à savoir notamment :
- obtenir de manière aisée les configurations souhaitée, notamment des liaisons par coopération de formes pour un blocage en rotation des parties 26, 27 l'une par rapport à l'autre et des logements pour des modules de redressement de courant;
- créer des isolations thermiques ;
- réaliser des passages axiaux pour le fluide de refroidissement afin de bien refroidir les éléments de redressement de courant et faire travailler la machine électrique tournante à des températures plus élevées;
- diminuer l'encombrement axial du dispositif de redressement de courant ;
- réduire les temps d'assemblage, notamment en final, sur le palier concerné ;
- standardiser au maximum l'agencement de redressement de courant ;
- utiliser des traces électriquement conductrices de rigidification pour réaliser aisément, avec un nombre minimum de pièces, des connexions électriques, notamment avec les éléments de redressement de courant ;
- réaliser des isolations électriques, notamment entre des modules de redressement de courant et par rapport au fond du palier avant ou arrière concerné;
- réaliser des liaisons électriques variables en fonction de la configuration des éléments de redressement de courant ;
- créer un dégagement pour le montage d'un ensemble régulateur de tension- porte balais et de la borne B+ ;
- favoriser le refroidissement du régulateur de tension à la faveur du dégagement;
- réaliser de manière aisée des interconnexions entre deux bornes d'entrée du régulateur de tension et deux phases de l'alternateur pour fournir des signaux de phases au régulateur de tension.
Dans les figures 3 et 4 ce boîtier isolant est en deux parties 26 et 27 (figures 3 et 4), qui sont en matière en matière plastique moulable. L'une 26 de ces parties, dites partie supérieure, forme un couvercle pour l'autre 27 de ces parties, dite partie inférieure.
Le boîtier 26, 27 est obtenu par moulage et renferme en son sein ici six module 100 de redressement de courant. Cette disposition permet de simplifier le palier avant ou arrière concerné car il n'y a pas besoin de réaliser dans celui-ci des trous de montage pour les diodes, dites diodes négatives, les autres diodes étant appelées diodes positives car elles sont destinées à être reliée électriquement à la borne positive, dite borne B+ destinée à être reliée via un câble à la borne positive d'un accumulateur d'énergie du véhicule, tel que la batterie du véhicule.

Chaque module 100 est dédié au redressement de courant d'une phase de la machine électrique tournante et est monté transversalement dans le boîtier ouvert à sa périphérie externe.
La périphérie externe du boîtier est de forme polygonale, tandis que la périphérie interne de ce boîtier est de forme annulaire comme visible à la figure 3.
L'axe du boîtier est confondu avec l'axe X-X de la figure 1. Le boîtier est axialement compact et présente transversalement une dimension supérieure à sa dimension axiale. Il occupe transversalement la place disponible.

Le dispositif de redressement de courant 25 est configuré pour former ainsi, de manière décrite ci-après, un ensemble unitaire manipulable et transportable que l'on monte ensuite sur le palier avant ou arrière concerné.

Chaque module comporte un support 16-10 des éléments de redressement de courant 93, 94 d'une phase de la machine, ici des diodes, en variante des transistors du type MOSFET ou IGB. Le support 16-10 est configuré pour être relié à la sortie de la phase concernée.

Le support 16-10 est ici électriquement et thermiquement conducteur.

Dans un mode de réalisation le support 10-16 est en une seule partie.

Dans un autre mode de réalisation le support est en deux parties 10-16.

Le nombre de modules 100 est fonction du nombre de phases que comporte la machine électrique tournante.

Ainsi pour un alternateur triphasé le nombre de modules est de trois, pour un alternateur pentaphasé le nombre de modules est de cinq.

On peut monter dans l'exemple représenté des figures 3 et 4 six modules 100 avec la présence de l'ensemble 14 porte-balais -régulateur de tension.

Un même agencement de redressement de courant 50, 25 peut donc servir, à la faveur de ses logements transversaux 600 de montage de modules, au montage de deux à six modules 100 selon les applications et le nombre de phases.

Le palier 50 peut donc être standardisé ainsi que le boîtier du dispositif 25.

Bien entendu en variante on peut standardiser le palier et monter sur celui-ci un boîtier spécifique par exemple conçu pour recevoir cinq modules.

Dans le mode de réalisation représenté chaque module 100 (figures 6 et 7) comporte une plaque 10 métallique électriquement conductrice, ici à base de cuivre, destinée à être reliée électriquement à la sortie d'une phase du stator de l'alternateur de manière décrite ci-après.

La plaque 10 appartient au support 16-10, qui porte les éléments de redressement de courant 94, 93 de la phase concernée. Ces éléments consistent dans ce mode de réalisation en des diodes positives 93 et négatives 94 dotées de queues respectivement 96, 97 comme à la figure 1. Les diodes sont selon une caractéristique implantées à 90° par rapport aux diodes des figures 1 et 2 ce qui permet de réduire l'encombrement axial; les queues des diodes étant parallèles au fond 56 et dirigées vers l'extérieur.

La diode positive 93 est destinée, via sa queue 96, à être reliée électriquement à la borne B+ référencée en 70 dans les figures, tandis que la diode négative 94 est destinée, via sa queue 97, à être reliée à la masse (figure 2 et 3) via le fond 56 du palier arrière 50.

Comme visible à la figure 5, représentant schématiquement une partie du circuit électrique du dispositif 25, l'anode de la diode positive 93 est en contact électrique avec la plaque 10 et il en est de même de la cathode de la diode négative 94. Dans cette figure on a représenté par simplicité que trois phases P1, P2, P3, montées en triangle, du bobinage du stator de la machine électrique tournante. Il existe trois autres phases non représentées.

De manière décrite ci-après
- une première liaison électrique 330, 310 relie les queues 97 des diodes 94 négative à la masse ;
- une deuxième liaison électrique 110 relie les sorties des phases à l'entrée 15 du dispositif 25 ;
- une troisième liaison électrique relie les queues 96 des diodes positives 93 à la borne B+ (référence 70).

Les modules 100 comportent un dissipateur de chaleur 16 thermiquement conducteur et ici également électriquement conducteur. Ce dissipateur 16 appartient au support 16-10 des éléments de redressement de courant 93, 94 et recouvre au moins partiellement une ouverture de passage 51 du fond 56.

Dans les figures ces dissipateurs 16 comportent des ailettes fines 18 (voir figure 6).

Les dissipateurs 16 sont implantés dans le flux axial d'air traversant les ouvertures d'entrée d'air 51.

Lorsque le rotor de la machine tourne, il y a création d'une circulation de l'air engendrée par la rotation du ventilateur (voir référence 124 à la figure 1). L'air traverse ainsi axialement les ailettes 18 des dissipateurs 16 et les ouvertures 51. Les modules sont ainsi bien refroidis en sorte que la machine électrique tournante peut travailler à des températures plus élevées.

Les éléments 93, 94 sont implantés au dessus des dissipateurs 16 de manière décrite ci-après.

Grâce à ces dispositions les éléments de redressement 93, 94 sont bien refroidis par les dissipateurs. En outre les queues 96, 97 des diodes 93, 94 sont d'orientation transversale ce qui permet de réduire l'encombrement notamment axial du dispositif 25.

Le bon refroidissement des éléments 93, 94 permet également de limiter l'échauffement de l'ensemble 14 selon l'invention sachant que le boîtier en matière électriquement isolante isole également thermiquement le dispositif 25 par rapport à l'ensemble 14 selon l'invention. Cet ensemble 14 est moins réchauffé par le dispositif 25 de température plus homogène et régulière que dans l'art antérieur.

Dans les figures le dissipateur 16 est solidaire d'une plaque 10 destinée à être reliée à l'une des sorties des phases du stator de la machine.

Cette plaque 10 est de forme oblongue en étant dans cette forme de réalisation globalement rectangulaire comme visible à la figure 7.

La plaque 10 est perpendiculaire au fond 56 du palier 50. Le dissipateur 16 comporte (figure 6) une embase 19 de forme oblongue adjacente à la plaque 10.

L'embase 19 a une forme complémentaire à celle de la plaque 10 et est donc ici globalement de forme rectangulaire. L'embase présente centralement une zone élargie 190.

Cette disposition est avantageuse car elle facilite la liaison entre les sorties des phases (voir référence 33 à la figure 1) d'orientation axiale et les plaques 10.

Les entrées 15 peuvent consister en des pattes de sertissage portées par un bras 115 issue de la plaque 10 comme visible dans les figures 6 et 7. La sortie de la phase est dénudée à son extrémité pour être fixée à la faveur des pattes 15 serties sur cette extrémité.

Suivant une caractéristique les parties 26, 27 sont axialement ajourées pour le passage du fluide de refroidissement, ici de l'air.

Dans ce mode de réalisation les parties 26, 27 comportent des ouvertures, respectivement 151, 251 (figures 8 et 9) de forme analogue aux ouvertures 51 d'entrée d'air (figure 16) du fond 56. Les ouvertures 51, 151, 251 sont axialement en correspondances les unes avec les autres et autorisent une circulation axiale du flux d'air de refroidissement.

Comme mieux visible dans la figure 16, les ouvertures d'entrée d'air 51 du palier 50 sont délimités latéralement par des bras 154 de rigidification et sont évasées en direction du dispositif de redressement de courant 25 pour bien guider le flux d'air. Cela permet de réduire la dimension transversale du palier 50.

La taille des ouvertures 51 est ici inférieure à celle des ouvertures 151, 251. Néanmoins une bonne circulation de l'air est obtenue grâce aux évasements permettant une accélération du flux d'air.

En variante, lorsque le palier présente une plus grande dimension transversale, la taille des ouvertures 51 est égale ou supérieure à celle des ouvertures 151, 251.

Les dissipateurs 16 sont implantés à la faveur de ces ouvertures 151, 251 pour être refroidis par le flux d'air.
Ces dissipateurs recouvrent ici les ouvertures 51.
En variante les ouvertures 151, 251, dont la taille est fonction de celle des modules 100, peuvent être de taille différente de celle des ouvertures 51.
Les modules recouvrent donc au moins partiellement les ouvertures 51.

Circonférentiellement on gagne de la place en sorte que l'on peut dans le mode de réalisation des figures 3 et 4 implanter six modules 100 et l'ensemble 14.

Les culots des diodes 93, 94 sont selon une caractéristique masqués au moins en majeure partie par la périphérie externe du boîtier et donc protégés. Les queues 96, 97 des diodes 93, 94 s'étendent en saillie radiale par rapport à la périphérie externe du boîtier pour leur raccordement à des bras appartenant à des traces de manière décrite ci-après.
Le boîtier 26, 27 s'étend circonférentiellement sur plus de 180°. Un passage 28, ici globalement en forme de V, s'élargissant radialement vers l'extérieur, existe entre les extrémités circonférentielle du boîtier.
Ce boîtier est centralement ouvert. Plus précisément il présente centralement une ouverture de forme annulaire 29 s'étendant comme le boîtier sur plus de 180° et qui communique au niveau de ses extrémités circonférentielles avec le passage 28.
Ici le boîtier 26, 27 s'étend circonférentiellement globalement sur 270°, tandis que le passage 28 s'étend circonférentiellement globalement sur 90°.

Suivant une caractéristique on tire parti du dégagement, formé par le passage 28 et l'ouverture 29, pour implanter, l'ensemble 14 monobloc régulateur de tension 61-porte balais 60 et la borne B+ portant la référence 70.
Le porte balais 60 pénètre selon une caractéristique dans l'ouverture centrale 29, tandis que le régulateur de tension 61 pénètre dans le passage 28 comme visible à la figure 3. L'ensemble 14 est implanté entre la borne 70 et les extrémités circonférentielles, ici cloisonnées, du boîtier 26, 27; l'ouverture 29 servant de logement au porte balais 60.
Ce porte balais 60 (figure 3) présente comme à la figure 1, une cavité d'orientation axiale, pour réception ici de l'extrémité arrière de l'arbre de la figure 1 équipé des bagues collectrices, et deux logements superposés d'orientation radiale pour chacun réception d'un ressort et d'un balai destiné à frotter sur l'une des bagues collectrice sous l'action du ressort comme visible à la figure 1.
La cavité axiale (non référencée) est engagée dans l'ouverture 29 (figure 3), tandis que les logements des balais s'étendent en majeure partie dans le passage 28 et ont une portion d'enracinement à la cavité axiale située dans l'ouverture 29.

La borne 70 présente un corps 72 de forme oblongue. Ce corps électriquement conducteur, ici à base d'aluminium, s'étend perpendiculairement au fond 56 du palier 50. Ce corps 72 est porté par un support 71 électriquement isolant, ici en matière plastique.
En variante le corps 72 est métallique en étant en une autre matière que l'aluminium par exemple en cuivre.

Suivant une caractéristique l'ensemble 14 comporte un corps 66 en matière électriquement isolante, ici en matière plastique. Ce corps 66 est configuré pour porter en saillie un dissipateur de chaleur 65 destiné, comme les dissipateurs 16, à être traversé axialement par un flux axial d'un fluide de refroidissement, ici un flux d'air axial de refroidissement, en sorte que la machine peut travailler à des températures plus élevées. Ce dissipateur 65 est relié thermiquement à un circuit intégré que comporte le régulateur de tension 61 appartenant à l'ensemble 14. Ici le circuit intégré du régulateur 61 réalise plusieurs fonctions. Il permet notamment de réguler la tension du bobinage d'excitation 101 de la figure 1, ainsi que de réguler la tension d'alimentation de la batterie et d'assurer la détection de défauts. Le circuit intégré du régulateur de tension est donc configuré en fonction des applications.
Ce dissipateur de chaleur 65 comporte ici une pluralité de passages d'air axiaux. Ces passages sont perpendiculaires au fond 56 et sont implantés en vis-à-vis d'au moins une ouverture d'entrée d'air 51 du palier 50. Les passages sont réalisés ici à la faveur d'ailettes fines comme pour les dissipateurs 16. L'ouverture 51 est une ouverture libérée ici par le boîtier 26, 27 à la faveur du dégagement 28, 29.
Ce dissipateur 65 est dans un mode de réalisation dans la même matière que le dissipateur 16.
Les points de fixation de l'ensemble 14 sur le palier 50 s'étendent en surélévation axiale par rapport au fond 56. Ici le corps 66 présente une partie perpendiculaire au fond 56. Le dissipateur 65 s'étend en saillie par rapport à une face de cette partie.
Plus précisément le corps 66 est globalement en forme de T. La partie centrale du T porte le porte balais 60 et à son pied la cavité axiale logée dans l'ouverture 29. Ainsi les logements superposés des balais sont réalisés dans la partie centrale du T.

Les ailes du T sont de longueur inégales pour occuper au mieux l'espace disponible.

Ces ailes selon une caractéristique s'étendent globalement perpendiculairement par rapport au fond 56 et au porte- balais 60, plus précisément aux logements superposés des balais, et non pas parallèlement par rapport au corps du régulateur comme à la figure 2, comme dans la figure 8 du document WO 03/009452. Le porte-balais n'est pas déporté latéralement comme à la figure 2.

Cela permet de réduire l'encombrement de l'ensemble 14 et de laisser circonférentiellement plus de place au dispositif 25.

Une première des ailes du T porte en saillie le circuit intégré, ici du type Asic, du régulateur de tension 61 au niveau de sa face dirigée vers le corps 72 de la borne. L'autre face de cette aile, suivant une caractéristique, porte en saillie le dissipateur de chaleur 65, par exemple en aluminium, destiné à être traversé axialement par le flux d'air de refroidissement et relié thermiquement au circuit intégré à la faveur d'un embase qu'il présente.
Plus précisément il est formé dans cette première aile un logement pour le circuit intégré. Ce logement s'étend en saillie au niveau de la face de la première aile dirigée vers le corps 72. L'embase pénètre dans le logement fermé par un couvercle du côté opposé à l'embase. Le logement est perpendiculaire au fond 56 du palier et a la forme du logement 161 de la figure 26.
L'extrémité de cette première aile est en forme de patte 64 trouée centralement pour le passage d'une vis de fixation 170 de cette aile à une cheminée 156 taraudée (figures 4 et 16) issue par moulage du fond du palier avec interposition d'une excroissance 323 (figures 4 et 8) issue de la partie supérieure 26 du boîtier.
Le circuit intégré du régulateur s'étend à 90° par rapport à celui de la figure 2 représenté en pointillés.

Une autre cheminée 157 taraudée (figures 4 et 16) issue également par moulage du fond 56 du palier existe au voisinage de la cheminée 156.
La cheminée 157 est axialement plus longue que la cheminée 156. Les cheminées sont implantées suivant une caractéristique à la faveur du dégagement 28, 29 et permettent une fixation en surélévation axiale de l'ensemble 14 de manière décrite ci-après.
Les cheminées 156, 157 sont axialement saillantes et sont implantées suivant une caractéristique au voisinage du bord de l'ouverture 51 libérée par le dégagement 28, 29. Cette ouverture 51 est en vis-à-vis des ailettes du dissipateur 65. Bien entendu en variante les cheminées 156, 157 sont rapportées.
Le dissipateur 65, par exemple obtenu par extrusion, comporte de manière précitée des ailettes espacées axialement les unes par rapport aux autres et une embase fixée ici par surmoulage dans le corps 66 et recevant le circuit intégré.
Les ailettes du dissipateur 65 sont transversalement de longueur inégales (figure 3 et 20) pour occuper au mieux la place restée libre dans le passage 28. Axialement un passage est présent entre deux ailettes consécutives pour circulation de l'air.
Les ailettes sont parallèles aux logements des balais mieux visibles à la figure 1. Ces ailettes sont implantées entre l'une des extrémités circonférentielles cloisonnées du boîtier et les logements des balais. Les ailettes sont en vis-à-vis (figure 16) de l'ouverture de passage d'air 51 présente entre les deux cheminées 156, 157. Cette ouverture 51 est localisée dans le dégagement 28, 29 du boîtier et est du type standard. Le dissipateur recouvre ici partiellement l'ouverture 51, les passages entre deux ailettes consécutives débouchant dans l'ouverture 51. Si besoin est on peut créer une ouverture spécifique.
L'embase (non visible) du dissipateur 65 s'étend ici perpendiculairement au fond 56.

En variante comme décrit dans le document FR 2 794 299, auquel on se reportera, le dissipateur 65 est distinct de son embase. Cette embase reçoit sur l'une de ses faces le circuit intégré et sur l'autre de ses faces le dissipateur à ailettes proprement dit.
Ainsi l'embase du dissipateur reçoit sur l'une de ses faces dans les deux variantes le circuit intégré et sur l'autre de ses faces directement ou indirectement les ailettes du dissipateur.
Un bon refroidissement du circuit intégré est obtenu dans tous les cas grâce aux ailettes du dissipateur 65 en correspondance avec une ouverture 51 de passage d'air.
Par rapport aux figures 1 et 2 de ce document on voit que le corps 66 de l'ensemble 14 comprend un tronçon qui s'étend perpendiculairement par rapport au porte balais 60 proprement dit ce qui permet de réduire l'encombrement circonférentiel. Ce tronçon porte le dissipateur 65. Les ailes en forme de T du corps 66 appartiennent à ce tronçon.

L'autre aile de ce T est dédiée à la fixation du corps 66 respectivement à la cheminée 157 et au corps de 72 de la borne 70.
A cet effet cette autre aile présente à son extrémité libre une oreille trouée 62 et une plage de fixation 63 trouée.
La tête d'une vis 174 (figure 20) prend appui sur la face frontale de l'oreille 62, traverse le corps 72 de la borne 70 et se visse dans un trou taraudé du fond 56 pour pincer une saillie 322 électriquement conductrice du boîtier 26, 27 entre cette oreille 62 et la face frontale du corps 72 afin d'établir des contacts électriques. La saillie 322 est également fixée au corps 72 à l'aide d'une vis 172 pour établir une liaison électrique avec la borne 70 reliée via un câble à la borne positive de la batterie du véhicule.
Une vis 171 traverse le trou de la plage 63, se visse dans le trou taraudé de la cheminée 157 et par l'intermédiaire de sa tête prend appui sur la face frontale de la plage 63 pour fixer celle-ci à la cheminée 157 reliée à la masse via le palier métallique 50, ici en aluminium.

Ainsi qu'il ressort de la description et des dessins la cheminée 156 est moins haute axialement que la cheminée 157 à cause de l'épaisseur de l'excroissance 323.

La hauteur axiale des cheminées 156, 157, de la borne 70 et de l'ensemble 14 dépend des applications et notamment de la hauteur axiale du boîtier 26, 27.

L'ensemble 14 est donc fixé en trois points 62, 63,64 à l'aide d'organes de fixation 170, 171, 174 ici en forme de vis. Cette fixation est axialement surélevée par rapport au fond 56, notamment à la faveur des cheminées 156, 157. Les faces frontales de l'oreille 62, de la plage 63 et de la patte 64 sont ici parallèles au fond 56. Le dissipateur est porté par une partie axiale du corps 66. Cette partie s'étend perpendiculairement au fond 56.
Toutes ses formes sont obtenues aisément par moulage du fait que le corps 66 est en matière plastique.

Bien entendu la surélévation des fixations de l'ensemble 14, à l'aide de cheminées et ce en combinaison avec une entrée d'air présente au niveau de ces cheminées et en correspondance avec des passages d'air prévus dans un dissipateur de chaleur porté en saillie par le régulateur 61, est d'un emploi universel. Ce type de solution peut être utilisée avec un autre type de dispositif de redressement de courant par exemple faisant appel à un support positif et à un connecteur de manière précitée comme par exemple dans le document WO 03/009452.

On notera que la face dorsale de la patte 64 présente deux extrémités apparentes de traces électriquement conductrices noyées dans le corps 66 pour coopérer de manière décrite ci-après avec (figure 8) les extrémités apparentes 402, 403 de deux traces électriquement conductrices noyées dans la partie 26 du boîtier et connectées, suivant une caractéristique à deux sorties de phase consécutives.
Ces traces sont en liaison électrique avec le circuit intégré pour un bon fonctionnement du régulateur multifonctions et éviter les phénomènes parasites, notamment les tensions parasites engendrées par les équipements auxiliaires connectés aux enroulements des phases du stator. Pour plus de précisions on se reportera au document FR 2 649 797.
Les extrémités apparente précitées de la pattes 64 constituent donc deux bornes d'entrée interconnectées suivant une caractéristique aux extrémités 402, 403 reliées électriquement à deux phases de l'alternateur. Ces bornes d'entrée reçoivent les signaux des phases ; le circuit intégré du régulateur 61 comportant notamment un comparateur pour comparer les signaux des deux phases.
La face dorsale de l'oreille 62 et de la plage 63 présente chacune une rondelle traversée respectivement par la vis 174 et la vis 171.
Les rondelles constituent les extrémités apparentes de deux traces électriquement conductrices reliées au circuit intégré et noyées dans le corps 66. Ces rondelles sont destinées à être reliées électriquement à la borne 70 et à la masse.

On notera, par rapport au figures 1 et 2 du document FR 2 649 797, que l'on gagne circonférentiellement de la place puisque la plage 63 et l'oreille 62 sont adjacentes et éloignées de la patte 64.

L'ensemble 14 porte également un connecteur 67 d'orientation axiale pour gagner de la place circonférentiellement. Ce connecteur est destiné à être relié au circuit intégré et via une ligne de données à un calculateur, par exemple au calculateur du contrôle moteur du véhicule, le régulateur de tension étant ici du type piloté.

Bien entendu les traces électriquement conductrices précitées (non visibles à la figure 3) sont noyées dans le corps 66 pour réaliser des connexions électriques entre le circuit intégré du régulateur de tension 61 et notamment les balais, le connecteurs 67, la masse et le corps 72 de la borne 70.
Toutes les extrémités apparentes des traces précitées sont visibles à la figure 27.
On notera que grâce au dégagement 28, 29 le porte balais 60 et le régulateur de tension 61 peuvent être monoblocs.

On voit à la figure 4 d'autres vis de fixation 192, 191.

Au moins une partie de ces vis de fixation 170, 171, 172, 174, 175, 191, 192 peut être remplacée en variante par un autre organe de fixation, tel qu'un goujon, un boulon, un rivet ou autre. L'utilisation des vis est donc décrite à titre non limitatif. Les trous associés aux organes de fixation 170, 172, 174, 175, 191, 192 peuvent donc être lisses ou taraudés.

Selon une autre caractéristique le boîtier 26, 27 est doté de cloisons globalement d'orientation radiale 30 délimitant les logements 600 d'orientation transversale (figures 4,8, 9) pour les modules 100 comportant des éléments de redressement de courant 93, 94 implantés à la périphérie externe du boîtier 26, 27.
Les cloisons 30 sont issues de bras 131 en étant saillante axialement par rapport à ceux-ci.

Les cloisons 30 sont moins épaisses que les bras 131 pour appui local des dissipateurs 16 des modules. Ces cloisons appartiennent à la partie inférieure 27 du boîtier 26, 27 et s'étendent en saillie axiale par rapport au fond 21 (figure 9) que présente la partie inférieure 27 cloisonnée du boîtier. Les cloisons 30 constituent des entretoises entre le fond 21 et le partie 26 constituant le couvercle du boîtier. Les bras 131 appartiennent au fond 21.
Le boîtier est moins encombrant axialement que transversalement.
Le fond 21 est en contact avec le fond 56 du palier 50 métallique relié à la masse. Plus précisément la face dorsale du fond 21 est en contact avec la face frontale du fond 56.
Le fond 21 et le couvercle 26 sont d'orientation transversale en étant parallèles au fond 56.
Les cloisons 30, d'orientation axiale, sont issues par moulage des bras 131 séparant deux ouvertures 251 consécutives.
L'ouverture centrale 29 est délimitée par une paroi annulaire 129 (figure 9) d'orientation axiale, qui s'étend circonférentiellement sur plus de 180°. La paroi 129 se raccorde à chacune de ses extrémités circonférentielle à une cloison 30.

Les cloisons 30 et la paroi 129 sont, d'une part, perpendiculaires au fond 21 et aux bras 131 et d'autre part, sont coiffées, de manière décrite ci-après par la partie supérieure 26 du boîtier formant un couvercle.

Les cloisons extrêmes 30 délimitent le passage 28 s'évasant en allant radialement de l'intérieur vers l'extérieur et en s'étendant globalement circonférentiellement de manière précitée sur 90°.

Les cloisons extrêmes 30, en combinaison avec le couvercle 26, permettent d'isoler thermiquement l'ensemble 14 par rapport au boîtier 26, 27. Les ailettes du dissipateur 65 sont de longueur inégales pour venir au plus près de la cloison extrême 30 adjacente du boîtier 26, 27.
Le passage axial de l'air sous l'action du ventilateur 124 de la figure 1 est ainsi bien canalisé.
La patte 64 du corps 66 présente un méplat en correspondance avec la cloison extrême adjacente du boîtier 26, 27.

Dans ce mode de réalisation les logements 600 s'étendent circonférentiellement globalement sur 45°en sorte que l'ouverture centrale 29 et la cloison 129 s'étendent globalement circonférentiellement sur 270°.
Bien entendu cela dépend des applications.
Ainsi avec une solution à cinq modules les logements 600 en variante s'étendent globalement circonférentiellement sur 45° ou en variante circonférentiellement sur plus de 45°.

Les modules 100 sont, dans cet exemple de réalisation, montés dans la partie inférieure 27 avant fermeture de celle-ci par le couvercle 26.

Les logements 600 transversaux des modules 100 sont ajourés axialement, ouverts radialement vers l'extérieur à leur périphérie externe et fermé à leur périphérie interne. Ces logements sont globalement de forme trapézoïdale pour recevoir de manière complémentaire les dissipateurs 16 également de forme trapézoïdale. Les plaques 10 sont implantées à la périphérie externe des logements.

Chaque logement 600 de réception d'un module 100 comporte une ouverture 151 et une ouverture 251 en correspondance avec une ouverture 51.
Les ailettes 18 des dissipateurs 16 sont implantées en vis-à-vis des ouvertures 151, 251, plus précisément entre celles-ci, pour être traversées par le flux d'air axial engendré, de manière précitée, par la rotation du ventilateur 124 de la figure 1 solidaire du rotor de la machine. Les éléments 93, 94 sont ainsi bien refroidis. Les ouvertures 151 et 251 sont ménagées respectivement dans le couvercle 26 et dans le fond 21 de la partie 27. Les modules 100 sont montés chacun dans un logement 600 transversal (figures 4, 8 et 9) adapté à la taille du dissipateur 16 pour réceptionner celui-ci. Ce logement 600 est ainsi de forme trapézoïdale en étant fermé par le couvercle 26. Il est délimité par le fond 21 doté d'une ouverture 251 au niveau de ce logement, le couvercle 26 doté au niveau de ce logement d'une ouverture 151 en correspondance avec l'ouverture 251 concernée, par un tronçon de la paroi 129 et par deux cloisons consécutives 30 de la partie 27.
La périphérie externe des cloisons 30 d'un logement 600 est configurée pour recevoir la plaque 10 et l'embase 19 du dissipateur 16. Le logement 600 a donc une forme rectangulaire à sa périphérie externe pour recevoir la plaque 10 et l'embase 19.

Grâce à cette disposition les modules sont isolés électriquement les uns des autres et sont appui localement au moins sur le bord délimitant la périphérie externe des ouvertures 151, 251.
Ces bords sont rectilignes comme visible par exemple dans les figures 3, 8 et 9 ; la périphérie externe du boîtier 26, 27 étant de forme polygonale à raison de un pan par ouverture 151, 251.

Ces cloisons 30 sont prolongées chacune à leur périphérie externe à une aile 231 de hauteur axiale inférieure à celle de la cloison 30.
Les ailes 231 sont toutes inclinées circonférentiellement dans le même sens pour autoriser le passage d'un bras incliné 115 et saillant circonférentiellement (figures 6, 7, 21) que comporte chaque module 100.

Chaque bras 115 présente à son extrémité libre les pattes de sertissage 15 pour assurer la liaison électrique par sertissage entre le module 100 et la sortie de la phase du stator concernée dénudée à cet endroit et traversant l'ouverture 34 (figure 21) en vis à vis des pattes 15.
Les bras 115 appartiennent chacun à une plaque 10.
Ils sont obtenus par découpe et pliage de matière.
On notera que deux pans consécutifs de la périphérie externe du boîtier sont reliés par un tronçon rectiligne (non référencé) s'étendant au niveau d'une aile 231 pour réaliser un dégagement pour le bras 115 et les pattes 15. Bien entendu en variante comme visible dans les figures 22 et 24 les bras sont remplacés par des languettes 240 métalliques en forme d'équerre avec une première partie en contact avec la plaque 10 et une deuxième partie perpendiculaire pour fixation avec la sortie de phase concernée.
La première partie de la languette est fixée par exemple par soudage ou brasage sur la plaque 10 et est implantée entre les deux diodes 93, 94.
Dans ce cas les ailes 231 peuvent être dans le prolongement des cloisons 30.

Le fond 21 de la partie inférieure 27 et la partie supérieure 26 sont parallèles et sont d'orientation transversale. Les parties 26, 27 seront appelées par la suite respectivement connecteur inférieur et connecteur supérieur car chacun de ces connecteurs en matière électriquement isolante, ici en matière plastique, comporte au moins une trace, respectivement inférieure et supérieure en matière électriquement conductrice surmoulée et localement apparente.
Ces traces rigidifient mécaniquement le fond 21 du connecteur inférieur 27 et le connecteur supérieur 26 et donc le boîtier. Elles permettent une réduction du nombre de pièces nécessaires pour les liaisons électriques du circuit électrique du dispositif 25.

Ainsi selon une caractéristique les modules 100 sont montés entre deux connecteurs rigidifiés. Le connecteur supérieur 26 est destiné, via sa trace supérieure associée, à être relié électriquement avec les diodes positives 93 et la borne 70, tandis que le connecteur inférieur 27 est destiné, via la trace inférieure, ici dédoublée, de son fond 21 à être relié électriquement avec les diodes négatives et avec la masse.

La trace supérieure du connecteur supérieur 26 est référencée en 320 dans les figures 5 et 13. Cette trace 320 en forme d'arc de cercle porte ici six bras apparents 321 en forme d'équerre. La trace 320 présente à l'une de ses extrémités la saillie apparente 322 dotée de deux trous 324, 325 destinées à être traversés respectivement (figure 3) par la vis 174 et par la vis 172.
Cette saillie 322 est une saillie d'orientation circonférentielle plus large que le corps de la trace 320 pour procurer de bons appuis.
Un manchon cylindrique épaulé 326 est monté dans le trou 324 et dans le trou de l'oreille 62 pour prépositionner celle-ci. Ce manchon appartient à l'extrémité circonférentielle du connecteur supérieur 26 opposée à l'excroissance 323 (figures 4 et 8).

Deux autres traces 400 et 401, dites traces de régulateur, (figures 11 et 12) électriquement conductrices sont également noyées en majeur partie dans le connecteur supérieur 27 pour prise d'informations sur les signaux de deux phases du stator par le régulateur de tension.

Chacune de ces traces 400, 401 de régulateur comporte une bande de matière, respectivement 404, 405, noyée dans le connecteur supérieur 26. Cette bande de matière 404, 405, de forme arquée, s'étend entre une première extrémité dorsale de liaison électrique, respectivement 406, 407 avec un module 100 et une seconde extrémité frontale de liaison électrique, respectivement 402, 403, avec les extrémités apparentes complémentaires des traces dorsales associées de la patte 64 du régulateur de tension 61. Ces extrémités apparentes constituent, de manière précitée, les deux bornes d'entrée auxquelles sont interconnectés les extrémités 402, 403 de deux phases consécutives.

Les extrémités frontales 402 et 403 sont apparentes au niveau de la face frontale de l'excroissance 323 du connecteur supérieur 26, tandis que les extrémités dorsales 406, 407 sont apparentes (figure 10) au niveau de la face dorsale du connecteur supérieur 26.
Plus précisément les extrémités dorsale 406, 407 sont destinées à venir en contact chacune avec une zone centrale élargie 190 (figure 6) du dissipateur 16 électriquement conducteur pour établir un contact électrique. Le dissipateur 16 présente ainsi, selon une caractéristique, une fonction supplémentaire.

Les premières extrémités 406, 407 sont globalement en forme de rondelle trouée centralement en 409.
Les deuxièmes extrémités 402, 403 sont de forme semi circulaire.
Les extrémités 402, 403 sont portées par l'excroissance 323 globalement de forme annulaire et trouée centralement pour le passage de la vis 170. L'excroissance est saillante axialement en direction du fond 56 par rapport à la face dorsale du connecteur supérieur 26 pour appui sur la cheminée 156.
La face frontale de l'excroissance 323 est en retrait axiale par rapport à la face frontale du connecteur supérieur 26. Ce décalage axial est fonction de l'épaisseur de la patte de fixation 64 du régulateur.

Les traces 400, 401 sont disposées le long de la trace 320 à l'intérieur de celle-ci. C'est la raison pour laquelle l'extrémité libre de la trace 320 est plus fine pour passage des traces 400, 401.
Cette extrémité libre a une fonction de maintien dans le moule lors de la fabrication du connecteur 26. Elle rigidifie également l'extrémité du connecteur 26. En variante on peut supprimer cette extrémité libre plus fine.

Ces traces 400, 401 dédiées au régulateur 61 sont courtes.
On tire partie selon une caractéristique, des deux modules 100 les plus proches de l'excroissance 323 pour obtenir des informations sur les phases et s'affranchir des phénomènes parasites comme décrit par exemple dans le document FR 2 649 797 précité. L'orientation transversale et perpendiculaire au fond 56 permet de réduire les longueurs des traces dédiées au régulateur 61.

Le fond 21 du connecteur inférieur 27 comporte, pour des raisons d'économie de matière, deux traces identiques, dont l'une est visible en 330 à la figure 14 et est représentée schématiquement à la figure 5.
Autrement dit la trace du connecteur 27 est dédoublée, chaque traces 330 étant associée à trois des six phases, dont seulement trois sont représentées par simplicité à la figure 5.
Bien entendu les deux traces 330 sont en variante remplacées par une seule trace.

Chaque trace 330, en forme d'arc de cercle, porte ici trois bras apparents 310 en forme d'équerre.

Chaque trace du fond 21 comporte deux extrémités trouées 294 pour sa fixation sur le fond 56 à l'aide de vis 191 se vissant chacune dans un trou taraudé associé 291 (figure 16) réalisé dans le fond 56.
Ces extrémités trouées 294 sont décalées axialement en direction du fond 56 par rapport à la trace 330 pour contact avec le fond 56. Cela est réalisé pour chaque extrémité 294 à l'aide d'un embouti non référencé à la figure 14.

Le bras intermédiaire 310 est dépourvu de trou.

Les extrémités d'orientation axiale des bras 310 et 321 sont dirigées axialement en sens inverse. Les bras apparents 310 et 321 sont décalés circonférentiellement.

Ces bras 310, 321 sont saillants radialement par rapport à la périphérie externe des connecteurs 21, 26 concernés. Ils comportent une partie radiale s'étendant en saillie radiale par rapport à la périphérie externe respectivement du connecteur inférieur 27 et du connecteur supérieur 26. Ces parties radiales sont prolongées par les extrémités axiales.
Les parties radiales traversent la périphérie externe rectiligne du connecteur 27, 26 concerné ce qui permet de réduire la longueur radiale de ces bras. On tire partie de la forme polygonale de la périphérie externe des connecteurs 21, 26.

Les bras 310, 321 sont dans les figures illustrées des bras de soudage car ils sont destinés à être reliés électriquement par soudage respectivement aux queues 96, 97 des diodes 94 et des diodes 93. En variante on peut concevoir des liaisons électriques par exemple par sertissage, agrafage ou autre avec les queues des diodes, constituants des bornes de connexion.

Les bras 310, 321 sont donc des bras de fixation chacun à une borne de connexion des éléments de redressement de courant 93, 94.

Les traces 320, 330 permettent de réduire le nombre de pièces de liaison électrique, ici trois pièces, par rapport au mode de réalisation de la figure 2. Les connecteurs 26, 27 équipés des traces 330, 320, 400, 401 permettent de réduire les temps de montage et de réduire le nombre de pièces.

Les traces 330, 320, 400, 401 sont métalliques. Elles sont par exemple en cuivre étamé. Elles rigidifient mécaniquement le boîtier.
Ces traces permettent également de réduire l'épaisseur de fond 21 du connecteur 27 et du connecteur 26.
Bien entendu les dimensions, ici égales, des bras 310, 321 sont en variante différentes car la longueur des queues des diodes 93, 94 peut être en variante différente.

Le connecteur supérieur 26 et le fond 21 du connecteur inférieur 27 présentent chacun des trous non référencés dans les figures 8 et 9 pour pouvoir positionner correctement les traces dans le moule concerné.

On notera, selon une caractéristique, que chaque extrémité d'orientation axiale d'un bras 310, 321 comporte un embouti incliné 350.

Ces emboutis 350 sont inclinés pour pouvoir souder électriquement les queues 96, 97 des diodes 93, 94 respectivement aux bras 321 et aux bras 310.

En effet en référence à la variante illustrée à la figure 23, chaque bras, ici le bras 310, peut présenter en variante un berceau pour recevoir la queue, ici la queue 97, de la diode concernée. Ces queues sont l'objet de défauts géométriques en ce qui concerne leur orientation. Ainsi elles peuvent être inclinées dans les deux sens en sorte que l'alignement et le contact entre le berceau du bras et la queue de la diode peut ne pas être parfait en vue de l'opération de soudage. Grâce aux emboutis 350 on résout ce problème car on rattrape les défauts géométriques circonférentiellement et radialement des queues des diodes et l'on peut souder électriquement les queues des diodes même avec un mauvais alignement.
La réalisation des traces en cuivre étamé facilite le soudage.

L'angle de l'inclinaison est compris entre 30 et 60°.
De bons résultats ont été obtenus avec un angle de 45°.

Grâce aux opérations de soudage, ou de sertissage, ou d'agrafage précitées des bras avec les queues des diodes on peut former par avance un dispositif 25 unitaire, manipulable et transportable avant sa fixation sur le palier 50. D'une manière générale on peut fabriquer le dispositif 25 en un lieu distinct de celui ou l'on réalise le palier 50.

Le dispositif 25 est traversé également par des organes de fixation 32, 192.
Ces organes traversent chacun, de manière décrite ci-après, un manchon cylindrique 292 en matière électriquement isolante, ici en matière plastique.
Les manchons 292 sont intercalés entre les le connecteur 26 et le fond 21 du connecteur 27. Ils permettent de réaliser par avance l'ensemble 25.

Dans les figures 3 et 4 ces organes consistent en des goujons 32 et en des vis 192, qui se vissent chacun dans un trou taraudé 392 (figure 16) réalisé dans le fond 56 du palier 50. Ces organes traversent chacun un manchon 292 réalisant une isolation électrique des organes de fixation par rapport aux dissipateurs de chaleur 16 des modules 100.

Ces manchons sont emmanchés chacun (figure 6) dans un trou 492 réalisé dans le dissipateur de chaleur 16 concerné. Ils traversent chacun le trou 492 concerné.
Les manchons 292 réalisent une isolation électrique entre les dissipateurs 16 et les organes de fixation 32, 192 traversant les manchons.

Plus précisément chaque module (figure 7 et 8) comporte de manière précitée une plaque 10 prolongée vers l'intérieur par un dissipateur de chaleur 16 solidaire de la plaque et destiné à recouvrir au moins partiellement une ouverture de passage d'air 51.

Le dissipateur 16 est matériau bon conducteur de chaleur, il est ici métallique, notamment en aluminium ou en cuivre en sorte qu'il est électriquement conducteur. Il présente de manière précitée une embase 19 prolongée vers l'intérieur par des ailettes fines 18.
Ce dissipateur 16 a une forme globalement trapézoïdale dont la grande base, constituée par l'embase 19

L'embase 19 est adjacente à la plaque 10. La plaque 10 est électriquement et thermiquement conductrice. Elle est métallique en étant ici en cuivre étamé ou nickelé et constitue également une plaque de refroidissement. La plaque et le dissipateur peuvent donc être dans le même matériau ou dans un matériau différent.

Ici la plaque 10 est moins épaisse que l'embase 19. Son épaisseur dépend du courant électrique la traversant.

Les ailettes 18 s'étendent perpendiculairement à l'embase 19 et ont des longueurs décroissantes aux extrémités de l'embase 19 pour donner au dissipateur une forme globalement trapézoïdale adaptée à celle des logements 600. Les ailettes 18 sont en correspondance avec une ouverture 51, 151, 251 associée.

Des passages axiaux d'air sont présents entre deux ailettes consécutives comme pour les ailettes du dissipateur 65, qui peut être en cuivre ou en aluminium.

Au milieu de l'embase 19 ces ailettes 18 ont une longueur constante pour formation de la zone centrale élargie 190 de l'embase. Cette zone 190 est dotée d'un trou 492 cylindrique traversant pour le passage du manchon 292 concerné. Deux de ces zones 190 sont configurées pour venir en contact électrique avec les premières extrémités respectivement 406, 407 des traces de régulateur 400, 401. La taille des extrémités 406, 407 est donc fonction de celle de la zone 190.

Le manchon 292 s'étend en saillie de part et d'autre des faces de la zone centrale 190 de l'embase 19 pour être emmanché dans des trous complémentaires en vis-à-vis 520, 521 (figures 8 et 9) ménagés respectivement dans le connecteur supérieur 26 et dans le fond 21 du connecteur inférieur 27. Les trous 520, 521 d'un même logement 600 sont des trous centraux

Ainsi grâce aux manchons 292 et aux trous centraux en vis-à-vis 521, 492, 520 il est possible selon une caractéristique de former un dispositif unitaire de redressement de courant 25 assemblé par avance et comprenant le boîtier équipé des modules 100 et ce avant fixation sur le palier 50. Cet assemblage peut être réalisé dans le même lieu ou dans un lieu différent de celui ou est réalisé l'assemblage final avec le palier 50.

Les manchons d'isolation électrique ont donc une fonction supplémentaire.

Ces manchons 292 sont également des manchons de centrage des modules 100 dans les logements 600.

La fixation des bras 310, 321 aux queues des diodes peut donc être réalisée avant ou après la fixation du dispositif de redressement de courant 25 au palier pour formation de l'agencement de redressement de courant. La fixation des sorties de phases de l'alternateur aux pattes 15 est ici réalisée en final.

Ces queues 96, 97 des diodes 93, 94 et le dissipateur 16 s'étendent de part et d'autre de la plaque 10 en matériau électriquement et thermiquement conducteur. Les queues 96, 97 sont parallèles aux ailettes 18. L'axe de symétrie des queues 96, 97 s'étend perpendiculairement par rapport à la plaque 10 et à l'embase 19.

Les axes des queues 96, 97 sont d'orientation transversale par rapport à l'axe X-X de la figure 1 constituant l'axe de la machine et l'axe de rotation du rotor de celle-ci.

Ici on réalise un assemblage par brasage de la plaque, des diodes et du dissipateur. Les diodes de la figure 6 sont ici du type standard et comportent donc un culot cylindrique 98 en partie moleté et une queue.

La plaque 10 (figure 7) comporte deux trous 119 à savoir un trou 119 cylindrique pour chaque diode.

Le contour de chaque trou 119 est crénelé avec une alternance régulière de languettes 117 et de creux 118. Les moletages des culots 98 des diodes sont en contact de centrage avec la périphérie interne des languettes 117.

La plaque 10 maintien ainsi les diodes ; les culots moletés 98 étant par leur moletage en prise avec les languettes 117.

On place un métal d'apport sans plomb entre la plaque et l'embase 19, puis on passe le tout au four de brasage ; un « dégazage » du métal d'apport se produisant à la faveur des creux 118 des trous 119.

Le métal d'apport est électriquement conducteur et thermiquement conducteur. Ce métal d'apport est, dans un mode de réalisation, contenu dans une pâte à braser.

Le surplus de métal d'apport est destiné dans tous les cas à pénétrer dans les creux 118 lors du passage dans le four de brasage.

Le métal d'apport, plus fusible que la plaque 10 et le dissipateur 16, consiste par exemple en un mélange d'étain et de cuivre, ou en un mélange d'étain et d'argent ou en un mélange d'étain et d'antimoine.

On voit en 17 de la brasure.

Lorsque le dissipateur 16 est en cuivre il n'y a pas de problème de brasage avec la plaque 10 ici à base de cuivre nickelé ou étamé.

Lorsque l'embase 19 est en aluminium, avant l'opération de brasage, on effectue un nickelage électrolytique ou chimique sur la face de l'embase opposée aux ailettes 18.

En variante on effectue sur cette face un cuivrage par la technique appelée en anglais « cold spray » ; cet à dire une projection sur cette face de poudre de cuivre contenu dans un gaz.

On peut réaliser ensuite l'opération de brasage conduisant à former un ensemble unitaire dissipateur - plaque - diodes.

La plaque de faible épaisseur par rapport à celle de l'embase est économique et permet de prépositionner les diodes en contact par l'extrémité de leur culot avec l'embase 19 Cette plaque a donc une fonction supplémentaire.

Ici l'épaisseur de la plaque est de 0,8 mm, tandis que l'épaisseur de l'embase 19 à l'extérieur de sa zone élargie est de 2 mm.

Tout cela dépend des applications. En variante l'épaisseur de la plaque est de 1 mm. L'épaisseur de la plaque est ici inférieure ou égale à la moitié de l'épaisseur de l'embase en dehors de sa zone élargie.

Ainsi les ailettes 18 peuvent avoir la taille la plus longue possible.

L'ensemble dissipateur 16-plaque 10 constitue le support des éléments de redressement de courant 93, 94 d'une phase de la machine polyphasée, ici l'alternateur à stator polyphasé.

En variante l'assemblage est réalisé par collage à l'aide d'une colle électriquement et thermiquement conductrice. Cette colle contient par exemple des particules d'argent.

Les creux 118 permettent une pénétration du surplus de colle.

En variante, comme visible à la figure 28, chaque trou 119 est délimité par une collerette cylindrique 318 perpendiculaire au plan de la plaque 10. Le culot cylindrique de la diode concernée est en contact intime par sa périphérie externe avec la périphérie interne de la collerette 318. Le culot ou corps de la diode 94 de la figure 28 est dépourvu de moletage en étant emmanché, ici à léger serrage, dans la collerette 318.

Dans ce mode de réalisation il est prévu des trous 218 pour la pénétration du surplus du métal d'apport ou de la colle (« dégazage »). De tels trous peuvent être également réalisés dans la plaque des figures 6 et 7 et 29.

Dans cette figure 29 la collerette 318 présente à son extrémité libre un rebord 418 transversal troué centralement. Le pourtour de ce trou est destiné à venir en prise avec la périphérie externe du culot de la diode concernée.

Le trou présente en variante la configuration à languettes et creux de la figure 7.

La plaque des figures 6, 7, 28 et 29 présente donc un trou de montage et de maintient de la diode, plus précisément du culot de celle-ci, avant sa fixation par brasage ou collage sur l'embase 19 du dissipateur 16. Cette plaque présente également des moyens d'évacuation du surplus du métal d'apport ou de la colle. Ces moyens consistent ici en des évidements d'évacuation du surplus de colle ou de métal d'apport, tels que des trous 218 ou des creux 118. Ces évidements sont dans les figures réparties de manière régulière ou en variante de manière irrégulière.

On obtient grâce à ces évidements un bon plaquage de la plaque 10 sur sont embase 19 et une bonne position géométrique des éléments de redressement de courant 93, 94 prépositionnés par la plaque.

Certaines languettes 117, ici globalement de forme trapézoïdale, sont en variante de longueur circonférentielle différente par rapport aux autres languettes.

Par exemple deux languettes 117 diamétralement opposées sont en variante de taille circonférentielle différente par rapport aux autres languettes.

Il en est de même en ce qui concerne les creux 118 ouverts vers l'intérieur.

Par exemple deux creux 118 sont en variante de longueur circonférentielle différente de celle des autres creux.

Certains des trous 218 sont en variante de taille différente de celle des autres trous 218.

Certains au moins des trous 218 sont en variante de forme oblongue.

La répartition de ces trous est en variante réalisée de manière irrégulière.

De même les creux 118 sont en variante remplacés par des trous circonférentiellement de forme oblongue. Deux languettes consécutives sont alors reliées entre elles circonférentiellement par une mince bande de matière.

En variante les moyens d'assemblage entre la plaque et le dissipateur 26 font intervenir des vis, ou des rivets, ou des goujons ou des boulons.

Dans ce cas la plaque 10 est plus épaisse que celle des figures 6, 7, 28 et 29 et donc moins économique car elle fait appel à plus de matière.

Par exemple, comme visible à la figure 24, la plaque est rapportée par vissage sur l'embase 19. Par simplicité on a repéré par des croix la position des trous pour les vis de fixation , qui traversent un trou lisse de la plaque 10 pour se visser dans un trou taraudé de l'embase. Un autre trou non visible existe à l'autre extrémité longitudinale de la plaque 10 dans sa partie basse au voisinage de la diode 94. La fixation est donc réalisée en trois points répartis en triangle pour occuper au mieux l'espace disponible.

Le montage des diodes est réalisé par exemple par emmanchement à force des diodes comme décrit ci-après en référence à la figure 25.

Dans une autre variante le dissipateur est rapporté par encliquetage sur la plaque. Par exemple l'embase comporte de pattes à crochets, qui traversent chacun une ouverture de la plaque pour venir en prise avec la face supérieure de la plaque.

Dans encore une autre variante l'embase 19 du dissipateur est rapportée par sertissage sur la plaque.

Dans un autre mode de réalisation un élément conducteur de chaleur et électriquement conducteur est intercalé entre la plaque et l'embase du dissipateur 16. Cet élément est intercalé entre la face inférieure de la plaque et la face supérieure de l'embase. Cet élément est dans un mode de réalisation de manière précitée de la colle thermoconductrice et électriquement conductrice.

En variante cet élément consiste en une feuille de matière plastique thermiquement et électriquement conductrice appelée pad thermique.

Ce pad est par exemple revêtu sur chacune de ses faces d'une couche de colle électriquement et thermiquement conductrice pour sa fixation sur la plaque 10 et l'embase 19.

En référence à la figure 24 on voit que cet élément est serré entre la plaque et l'embase à l'aide des vis de fixation.

En variante comme visible à la figure 25, les diodes 93, 94 présentent un culot cylindrique 98 en partie moleté pour leur emmanchement à force dans un trou 198 de la plaque 10.
Le trou 198 est débouchant, en variante le trou est borgne pour une meilleure évacuation de la chaleur, le fond des culots étant en contact avec le fond du trou borgne 198.

La plaque 10 supporte les diodes 93, 94 dans ces cas. Cela est applicable au mode de réalisation de la figure 24.

En variante le fond des culots 98 est en contact avec le fond d'un trou borgne 298 (figure 25) réalisé dans l'embase 19, les culots traversants les trous 198.

Le moletage des culots 98 peut être en prise chacun avec le contour d'un trou 198 et avec un trou borgne aligné de l'embase 19 en sorte que les diodes 93, 94 sont des moyens d'assemblage de l'embase 19 avec la plaque 10.

Les vis de fixation de la figure 24 sont dans ce cas supprimées. L'embase 19 et la plaque 10 constituent dans ce cas le support des diodes 93, 94.
En variante on emmanche à force les culots des diodes dans un trou borgne de l'embase. Le support des diodes peut être donc monobloc. En variante on fixe par brasage les diodes sur la face de l'embase opposée aux ailettes. Les bras 115 à pattes 15 sont dans ce cas solidarisés par exemple par brasage ou soudage sur l'embase. En variante on fixe la languette 240 enforme d'équerre sur cette face de l'embase 19 par exemple par soudage ou brasage.

D'une manière générale la fonction électrique du module 100 est réalisée à l'aide des éléments de redressement de courant 93, 94 et de la plaque ou de l'embase, tandis que la fonction de dissipation de chaleur est réalisée par les ailettes 18 du dissipateur 16 disposées dans le flux d'air.

Ces ailettes fines sont obtenues par exemple par extrusion.

L'invention permet de conserver les goujons 32, comme visible à la figure 3, et le mode de fixation par encliquetage du capot 31 de la figure 1 au palier 50.

Dans cette figure 3 on n'a pas représenté le capot de protection 31 en matière plastique de la figure 1. Par contre on voit en 32 les trois goujons de fixation de ce capot. Les goujons 32 se vissent dans les trous 392 du fond 56 du palier 50 et servent également à la fixation du dispositif de redressement 25 au palier 50 comme dans la figure 1 et ce en association avec les vis de fixation 192 se vissant également dans le fond 56, doté également de taraudages 392 à cet effet. Ces vis 192 prennent appui par leur tête sur le connecteur supérieur 26. Chaque goujon 32 comporte entre ses deux tronçons filetés un écrou fixe(non référencé) pour vissage du goujon 32 dans le trou 392 et pour appui sur la face frontale du connecteur 26. Les vis 192 et les goujons traversent chacun un trou 520 du connecteur supérieur 26, un manchon 292 montés dans un trou 492 du dissipateur et un trou 521 du fond 21 du connecteur inférieur 27 pour se visser dans un trou 392.

On notera en référence aux figures 8 à 10, que des moyens de blocage en rotation par coopération de formes sont prévus entre les deux parties 26, 27 du boîtier pour leur blocage en rotation l'une par rapport à l'autre et leur prépositionnement.
Dans ces figures ces moyens comportent des rainures 300, 329. Selon une caractéristique, chaque cloison 30 s'engage dans une rainure 300 complémentaire présente dans la face dorsale des bras 132 séparant deux fentes 151 consécutives globalement de forme trapézoïdale. Les bras 132 ont ici une largeur identique à celle des bras 131.
La périphérie interne du connecteur 26 est délimitée par un tronçon d'anneau 229 s'étendant circonférentiellement sur plus de 180°, ici globalement circonférentiellement sur 270°. Ce tronçon 229 est dorsalement pourvu d'une rainure 329 dans laquelle s'engage la paroi annulaire 129.
Cette paroi 129 est issue de moulage d'un tronçon d'anneau s'étendant comme le tronçon 229 sur plus de 180° ; la longueur circonférentielle du tronçon 229 et de la paroi 129 étant égale. L'épaisseur de la paroi 129 est bien entendu inférieure à celle du tronçon 229.

Un blocage en rotation ainsi qu'un prépositionnement est ainsi réalisé entre les deux parties et les deux connecteurs 26, 21. On notera que la hauteur axiale des ailes 231 est fonction de la distance axiale entre la face frontale du fond 21 et la face dorsale du connecteur 26, pleine au niveau des ailes 231.
En variante les cloisons 30 ne sont pas toutes de la même hauteur et seule une partie de celles-ci pénètre dans une rainure 300. Le nombre de rainures 300 est en variante inférieur au nombre de cloisons 30. Le blocage en rotation des parties 26, 27 fait donc intervenir en variante qu'une partie des cloisons 30.

Bien entendu le capot 31 de la figure 1 peut présenter à sa périphérie externe une collerette annulaire pour sa fixation sur le palier 50 à l'aide d'organes de fixation s'étendant radialement à l'extérieur du dispositif 25.

Dans ce cas, comme visible à la figure 4 le dispositif 25 est fixé uniquement à l'aide des vis 192 vissées dans le fond 56.

Ce fond 56 est mieux visible à la figure 16. Dans cette figure on voit en 57 la capsule de montage du roulement 20 de la figure 1, en 52 l'âme cylindrique de passage de l'extrémité arrière de l'arbre 3 de la figure 1, en 51 les ouvertures d'entrée du fluide de refroidissement, ici de l'air, en 53 les ouvertures de sortie de l'air délimitées par des nervures 153. Les ouvertures 51 sont évasées vers l'extérieur du palier 51 et délimitées latéralement par deux bras 154 de rigidification de manière précitée. Les ouvertures 53 affectent en majeure partie le rebord 55 et en partie la périphérie externe du fond 56, globalement de forme annulaire. Lorsque la poulie 112 de la figure 1 est entraînée en rotation, le rotor tourne ainsi que les ventilateurs 123 et 124 en sorte qu'il se produit une circulation du fluide de refroidissent, ici de l'air, entre les entrées 51, globalement de forme trapézoïdale, et les sorties 53 de forme oblongue. Cette circulation permet de refroidir le dispositif de redressement de courant 25 car elle traverse axialement les ailettes des dissipateurs 16 et également du dissipateur 65. La machine peut donc travailler à des températures plus élevées. Pour plus de précisions sur la circulation de l'air on se reportera par exemple au document FR 2 602 925.
Les réalisations décrites permettent donc de conserver les ouvertures 51, 53 du palier concerné.

En variante les ventilateurs internes 123 et 124 sont supprimés et remplacés par un ventilateur externe en sorte que l'air traverse axialement le carter de la figure 1 à la faveur des ouvertures 51 réalisées dans les paliers 116, 50.
En variante, comme décrit dans le document FR 2 744 575, on utilise par la circulation de l'air, une pompe centrifuge qui aspire de l'air à l'intérieur du carter de l'alternateur et le refoule par un canal.

A la lumière de ce document on voit qu'en variante l'invention est applicable au cas ou c'est le palier avant qui porte le dispositif de redressement de courant. En variante c'est le palier 116 de la figure 1 qui porte le dispositif 25 avec présence d'un capot comme dans le document FR 2 744 575.

De même l'invention est applicable au cas ou le rotor est un rotor à pôles saillants éventuellement doté d'aimants comme décrit dans le document WO 02/054566.

De même le rotor à griffes peut être assemblé par sertissage à l'arbre et comporter des aimants entre ses dents comme visible à la figure 2 du document FR 2905 806 auquel on se reportera.

La solution selon l'invention permet de conserver la structure du rotor.

A la figure 16 on voit également en 34 une des ouvertures de passage d'une sortie d'une phase 33 (figure 1) du stator et en 155 une des protubérance servant à la fixation du palier arrière au palier avant à l'aide de tirants et/ou de vis comme visible par exemple dans les documents FR 2602925 ou EP 0515 259.

Comme visible également dans cette figure 16 le fond 56 porte en saillie axiale les deux cheminées précitées 156, 157, intérieurement taraudées pour la fixation de l'ensemble 14 au palier. Ce fond 56 présente également à sa périphérie externe deux plages planes d'appui 158, 159 présentant chacune un trou taraudé 181 et un trou lisse de pré positionnement 179 pour la fixation du corps 72 de la borne B+ de manière décrite ci-après.

Les plages 158, 159 sont adjacentes aux cheminées 156, 157 plus proches de l'axe X-X que les plages.
La hauteur axiale de ces cheminées dépend des applications.

La présence de ces cheminées 156, 157 et plages d'appui 158, 159 ne modifie pas de manière profonde le palier 50 ici à base d'aluminium et donc en matière moulable.

Les ouvertures d'entrée d'air 51 sont séparées circonférentiellement les unes des autres par les bras 154, qui sont des bras de rigidification et également des bras de liaison de l'âme centrale 52 à la périphérie externe du fond 56. Les bras 154 s'étendent en surépaisseur par rapport à la bande de matière reliant l'âme 52 à la périphérie externe du fond 56. Cette bande de matière est plus large que le bras et appartient à l'évasement délimitant l'ouverture 51.

Les ouvertures 51 sont globalement de forme trapézoïdale et comportent centralement chacune au niveau de leur plus grand bord circonférentielle une protubérance 152 dotée d'un trou taraudé 392 et saillante à l'intérieur de l'ouverture 51.
Les protubérances sont ici globalement de forme circulaire.
On notera que les ouvertures 151, 251 des connecteurs 26, 27 présentent centralement, au niveau de leur plus grand bord circonférentiel, également chacun une protubérance annulaire 252, 352 interne saillante à l'intérieur de l'ouverture 151, 252 à l'image de la protubérance 52. Les protubérances 252, 352 ont ici la même forme que la protubérance 152 et sont chacune dotée d'un trou 520, 521.
Les trous 392, 520, 521 sont axialement alignés. Les deux trous 409 des traces 400, 401 sont en correspondance avec deux des trous 520 du connecteur 26. Les rondelles 406, 407 des traces 400, 401 sont chacune portées par l'une des protubérances 520 et destinées à venir en contact électrique avec une zone élargie 190 d'un dissipateur 16. Ces rondelles portent, pour leur ancrage dans la protubérance 520 concernée, ici trois saillies, dont deux sont trouées. Un décalage radial est réalisé à la faveur d'un emboutit entre la rondelle 406, 407 et la bande de matière 404, 405 concernée.

Le fond 56 présente également deux trous lisses 279 de prépositionnement diamétralement opposés.

Les trous taraudés 392 sont dédiés au vissage des vis 192 ou des goujons 32 traversant le boîtier 25 et servant à la fixation de celui-ci au fond.

On appréciera qu'un unique organe de fixation 32, 192 est prévu par module en sorte que le nombre d'organes de fixation 192, 32 est réduit au minimum par module.

Les trous 279 servent à la réception chacun à la réception d'un pion de centrage (non visible) s'étendant en saillie axiale par rapport à la face dorsale du fond 21 du connecteur 27. Cette disposition permet de prépositionner le boîtier sur le palier avant sa fixation par les vis 192 et les goujons 32.

Les trous 291 servent au vissage de vis 191. On notera que ces trous 291 sont radialement alignés chacun avec un trou 392 en étant disposés de part et d'autre d'un bras 154 ; les trous 291 étant implantés à l'extérieur des trous 392.

On appréciera que la zone centrale élargie 190 est prise en sandwich entre deux protubérances 352, 252 axialement alignés. L'embase 19 du dissipateur 16 est en appui partiellement sur ces protubérances à la faveur de sa zone 190.
L'embase 19 est également en appui sur la périphérie externe du logement 600 globalement de forme rectiligne, cette périphérie externe constituant le bord supérieur des ouvertures 151, 251.
On notera que cette périphérie externe est de plus faible épaisseur au voisinage de la protubérance 352 du fond 21 pour le passage de la partie radiale d'un bras comme visible à la figure 9.
Ce fond 21 porte également des saillies 621 reliées chacune à une cloison 30. Chaque saillie 621, de faible épaisseur, est adjacente à l'un des bords latéraux de l'ouverture 251 concernée. A chaque logement 600 il est associé ainsi deux saillies 621
Ces saillies sont adaptées à coopérer chacune avec la partie basse de l'une des extrémités longitudinales 191 (figure 6) de la face dorsale de l'embase.

Ainsi le module 100 est bloqué en rotation. Chaque logement est donc doté de moyens de blocage en rotation de l'embase du module et donc du module. Ces moyens permettent de diminuer le nombre d'organes de fixation 32, 192.

Chaque plaque 10 et/ou chaque embase 19 est d'orientation axiale par rapport à l'axe X-X comme visible par exemple dans la figure 4.

La plaque 10 et l'embase 19 sont en contact indirect avec le fond 56 via leur tranche. Plus précisément le fond 21 est intercalé entre le fond 56 et les tranches inférieures de l'embase 19 et de la plaque 10 ou de l'embase seule lorsque le support des diodes est monobloc avec le dissipateur.

Le fond 21 a une fonction d'isolation électrique. Il a également une fonction d'isolation thermique entre les modules et entre le fond 56 du palier et les modules. En effet le palier, selon les conditions de fonctionnement de la machine, peut être plus chaud que les modules. Le fond 21 isole alors thermiquement les modules du palier en sorte que les diodes sont ménagées.

La tranche inférieure (figure 4) de la plaque et/ou de l'embase s'étend ainsi globalement perpendiculairement au fond 56.

Cette plaque 10 et/ou cette embase 19 s'étend donc globalement perpendiculairement par rapport au fond 56 du palier 50. Le dissipateur 16 disposé dans le flux d'air axial engendré par la rotation du rotor de la machine.

Suivant une caractéristique la borne 70 présente de manière précitée un support 71 en matière électriquement isolante, ici en matière plastique destinée en venir en contact par sa face dorsale, mieux visible à la figure 18, en contact avec les plages planes 158, 159 du fond 56 du palier 50.

Ce support 71 comporte deux pions 79 s'étendant en saillie axiale par rapport à la face dorsale du support 71 pour pénétrer de manière dans les trous lisse 179 de prépositonnement des plages 158, 159.
Cette disposition facilite le montage de la borne 70 implanté à la périphérie externe du palier 50 selon une corde.
Les deux pions diamétralement opposés du fond 21 ont une forme analogue aux pions 79 pour s'engager dans les deux trous 279.

Le corps 72 est conformé pour venir, par l'intermédiaire de sa face dorsale, en contact avec la face frontale du support 71.
Le support 71 présente une proéminence 80, ici globalement rectangulaire, pour selon les applications servir de bord inférieur à une ouverture du capot, cette ouverture étant dédiée au passage du câble venant de la borne positive de la batterie en sorte que le support présente une fonction supplémentaire.
Le corps 72 est mieux visible à la figure 17. Ce corps présente latéralement une creusure 83 dotée d'un trou 81.

Le trou 81 sert au passage de la partie filetée d'une vis 173 électriquement conductrice présentant une tête ici de section ici carrée, en variante de section rectangulaire ou à méplats. La tête de la vis 173 pénètre à faible jeu dans la creusure en sorte que la vis, ici en acier, est immobilisée en rotation par coopération de forme avec les bords de la creusure 83. La vis sert au serrage de l'extrémité du câble venant de la borne positive de la batterie.

Cette extrémité de câble prend appui sur la face de la borne opposée à la creusure 83 et est traversée par la tige filetée de la vis 173 pour être serrée à l'aide d'un écrou.
La vis 173 est d'orientation radiale comme visible à la figure 3.
En variante on peut orienter la creusure 83 à 90° en sorte que la vis 173 peut s'étendre axialement. Toute autre orientation est possible. Cela est rendu possible grâce au support 71 présentant à ses extrémités et en saillie axiale deux cheminées cylindriques 74, 75 pénétrant chacune à isolation électrique dans un trou cylindrique traversant respectivement 77, 76 du corps 72. Les trous 76, 77, ainsi que les cheminées associés 74, 75 ont ici des hauteurs différentes. Tout dépend des applications.
Les trous 76, 77 s'étendent entre les faces frontales et dorsales du corps 72, tandis que les pions 79 sont implantés entre les cheminées 74, 75 et au voisinage de celles-ci.

Le corps 72 comporte également un trou taraudé 82 débouchant au niveau de la face frontale du corps 72.

La cheminée 75, montée dans son trou associé 76 du corps 72, sert au passage à isolation électrique de la partie filetée d'une vis 175 se vissant dans le trou taraudé 181 de la plage 159 (figure 16).
La tête de la vis 175 est noyée dans un canon 176 en matière électriquement isolant, ici en matière plastique.

Ce canon 176 est de forme tubulaire et étagé en diamètre pour former un épaulement d'appui pour la tête de la vis et pénétrer en partie dans le trou 76 plus long axialement que la cheminée 75.

La cheminée 74 est également plus courte axialement que le trou 77, dans lequel elle est engagée.
La cheminée 74 sert au passage à isolation électrique de la tige d'une vis se vissant dans le trou 181 de la plage 158.
La tête de la vis 174 (figure 20) prend appui sur la face frontale de l'oreille 62 de l'ensemble 14 pour pincer la saillie 322 électriquement conductrice du connecteur supérieur 26 entre cette oreille et la face frontale du corps 72 afin d'établir un contact électrique entre la rondelle apparente de la trace associée à la face dorsale de l'oreille 62 et la face frontale de la saillie 322.
La vis 174 traverse à isolation électrique le trou 324 de la saillie 322 par l'intermédiaire du manchon 326 épaulé saillant engagé dans ce trou 324 ainsi que dans celui de l'oreille 62. Ce manchon 326 pénètre également dans le trou 77 en sorte que la vis 174 traverse le trou 77 à isolation électrique à la faveur du manchon 326 et de la cheminée 74.

Une vis 172 se visse dans le trou 82 pour établir par l'intermédiaire de sa tête un contact électrique entre la face frontale du corps 72 et la saillie 322 du boîtier. Cette vis traverse le trou extrême 325 de la saillie 322.

Bien entendu la présente invention n'est pas limitée aux exemples de réalisation décrits.

Ainsi les ailettes du dissipateur 65 sont dans un mode de réalisation de longueur égale comme visible dans les figures 26 et 27 dans lesquelles le circuit imprimé du régulateur n'est pas encore monté dans son logement 161. Le logement de la figure 3 a une forme analogue à celui des figures 26 et 27. Après liaison du circuit intégré avec l'embase et enrobage de ce circuit intégré par un gel de protection, on referme le logement par un couvercle de protection du côté de celui-ci opposé à l'embase.

Le logement 161 s'étend à 90° par rapport à celui des figures précédentes, c'est-à-dire perpendiculairement aux ailes du corps 66 et non pas parallèlement comme dans la figure 3. L'embase du dissipateur est en forme d'équerre avec une partie d'orientation axiale et une partie d'orientation transversale.
La partie axiale s'étend perpendiculairement par rapport au fond 56 du palier 50 et porte les ailettes du dissipateur.

La partie transversale 165 s'étend parallèlement au fond 56 et pénètre dans le logement 161 pour être en contact thermique avec le circuit intégré du régulateur.
Cette disposition est avantageuse car cela permet de libérer de la place; la partie transversale pouvant s'étendre transversalement au dessus de la face frontale du corps 72 de la borne.

Dans ces figures on voit en 162 la partie apparente en forme de rondelle de la trace associée à l'oreille 62, en 163 la partie apparente en forme de rondelle de la trace associée à la plage 63 et destinée à coopérer électriquement avec l'extrémité de la cheminée 157 et en 502, 503 les deux bornes de la pattes 64 destinées à coopérer avec les extrémités 402, 403 des traces 400, 401.

En variante comme visible à la figure 22 le fond 56 du palier 50 porte d'un seul tenant des saillies d'orientation axiale 250, c'est-à-dire perpendiculaires au fond 56 ; pour liaison électrique des queues 97 des diodes négatives 94 avec le palier 50.

Cette liaison est réalisée par soudage, sertissage, encliquetage ou agrafage des queues dans les saillies présentant à cet effet leurs extrémités libres une fente 260 de réception de la queue concernée. La saillie est ici venue de moulage avec le palier.

En variante la saillie 250 consiste en une cheminée venu de moulage avec le fond 56 et portant à solidarisation un organe en cuivre, par exemple en forme de clou enfoncé dans la cheminée, pour liaison par soudage ou tout autre moyen de l'extrémité de la queue 97 de la diode 94 avec la tête du clou.

En variante la saillie est rapportée sur le fond 56 du palier 50 par exemple par soudage, rivetage, vissage ou tout autre moyen. Cette saillie consiste par exemple en un organe en cuivre solidaire du fond 56, par exemple par rivetage ou soudage, et présentant une tête d'assemblage, par exemple par soudage, avec l'extrémité de la queue 97 de la diode négative 94.

Dans ce mode de réalisation le fond 21 ne porte pas de trace 330 à bras 310, puisque la liaison à la masse est réalisée par les saillies 250.

En variante on peut conserver uniquement la partie noyée de la trace 330, c'est à dire sans les bras apparents de celle-ci pour rigidifier mécaniquement si nécessaire le fond 21. Dans ce cas la partie noyée de la trace est en matière moins noble car elle n'a pas de fonction électrique.

En variante, comme visible à la figure 24 le dissipateur 16 de forme trapézoïdale, au lieu d'ailettes 18, comporte des fentes de forme oblongue 184 délimitées par des bandes de matières 185.

Ce dissipateur 16 à fentes 184 est obtenu par exemple par moulage lorsqu'il est à base d'aluminium.

Les ailettes 18, au lieu d'être fines, sont dans un autre mode de réalisation plus épaisses.

Le dissipateur 16 peut avoir encore une autre forme. Par exemple les fentes 184 de la figure 24 peuvent être remplacées par une pluralité de trous.

En variante le dissipateur 16 présente un cadre de forme trapézoïdale dans lequel est monté une bande de matière en forme d'accordéon.

Tout ce qui est dit en référence au dissipateur 16 est applicable au dissipateur 65 de l'ensemble 14.

La machine électrique peut être en variante de manière précitée sans balais en sorte que la présence du porte-balais n'est pas obligatoire ce qui peut permettre de monter un septième module.

On peut même implanter ailleurs le régulateur de tension et donc monter un ou plusieurs modules supplémentaires selon les applications.

On peut déporter axialement le boîtier et le dispositif de redressement 25 par rapport à l'ensemble 14.
Le boîtier 26, 27 peut comporter plus de six logements par exemple 7 ou 8 logements pour porter 7 ou 8 modules. Dans ces cas l'implantation du ou des logements supplémentaires est réalisée à la faveur de la réduction ou de la suppression du passage 28.
Le palier 50 peut être standardisé et recevoir un nombre de modules fonction des applications.

En variante, de manière précitée, les modules peuvent être portés par le fond du palier avant de la machine. On peut créer un module pour redresser le point neutre lorsque les sorties des phases sont connectées en étoile.

En variante le palier arrière est doté de saillies implantées au niveau des trous 392, telle que des cheminées taraudées ou des saillies alors taraudées du type de la figure 22, pour montage du boîtier à distance du fond 56 et parallèlement à celui-ci. Dans ce cas le capot présente des ouvertures réalisées dans sa jupe comme à la figure 2 du document WO 2004/040738.

En variante ces saillies appartiennent au fond 21 du connecteur inférieur 27.

En variante le boîtier est monté sur une mezzanine ajourée portée par le palier 50 comme décrit dans le document WO 2004/040738 précité.

Dans tous le cas le boîtier et donc le dispositif de redressement de courant est porté par le palier avant ou arrière concerné.

On peut inverser les structures en sorte qu'en variante le dispositif 25 est porté non pas par la face frontale du palier du carter de la machine mais par la face dorsale du palier formant capot de protection.

Dans ce mode de réalisation le palier concerné est allongé axialement et c'est le fond 56 du palier qui porte le logement pour le roulement arrière de l'alternateur ; les bagues collectrices étant implantées en amont du fond 56 et du roulement arrière.

Le carter de la machine peut comporter plus de deux parties. Par exemple le carter peut comporter un palier avant, un palier arrière et une partie intermédiaire portant le stator.

Les ventilateurs à action centrifuge référencés en 123 et 124 à la figure 1 sont en variante à action axiale en sorte que la présence des ouvertures 53 n'est pas obligatoire.

La machine est en variante refroidie également par circulation de fluide. Par exemple on peut supprimer le ventilateur avant 123 de la figure 1 et réaliser dans le palier avant 116 un canal de circulation d'un liquide de refroidissement, tel que le liquide de refroidissement du moteur thermique du véhicule.

L'invention est applicable au cas ou la machine électrique tournante est associée à un moteur thermique fixe.

Ainsi qu'il ressort de la description et des dessins les éléments de redressement de courant 93, 94 sont implantés à la périphérie externe du fond 56 du palier concerné, à l'extérieur des ouvertures 51 d'entrée d'air en sorte que ces ouvertures ou ouies du palier sont dégagées et que la longueur radiale des ailettes 18 ou des fentes 184 du dissipateur est transversalement la plus longue possible.

On appréciera la compacité axiale des solutions puisque les queues 96, 97 des diodes 93, 94 sont orientées transversalement vers l'extérieur et non axialement.

Les queues 96, 97 des diodes 93, 94 sont dans les figures de longueur identique. En variante les queues sont de longueur différente. Cela est possible grâce à la configuration des bras 310, 321, qui peuvent être de taille axiale et/ou radiale différente pour s'adapter aux longueurs des queues concernées.

En variante les diodes ne comportent pas de queues comme à la figure 1.

En effet les bras 310, 321 peuvent être configurés pour s'appuyer directement sur la tête de la diode 93, 94 concernée. Bien entendu l'une des diodes peut présenter une queue et l'autre pas.

Ces diodes peuvent être remplacées par tout autre élément de redressement de courant alternatif en courant continu, notamment par des transistors du type MOSFET lorsque l'alternateur est réversible et consiste en un alterno-démarreur, en sorte que les éléments de redressement de courant ne sont pas forcément des diodes. Ces éléments comportent dans tous les cas un élément semi conducteur.

La machine peut donc être un alterno-démarreur.

Les modules peuvent porter d'autres composants électroniques.

En variante les ouvertures des logements peuvent être différentes d'un logement à l'autre.

Ainsi des logements peuvent présenter des ouvertures de forme trapézoïdale et d'autres modules des ouvertures de forme différentes.

Les manchons 292 électriquement isolant intercalés axialement entre les deux parties 26, 27 pour formation d'un boîtier unitaire et traversés par les organes de fixation 192, 32 peuvent être épaulés à chacune de leurs extrémités à la faveur d'un changement de diamètre pour former une entretoise entre la face dorsale du couvercle 26 et la face frontale de la partie inférieure 27 du boîtier. Les manchons 292 sont emmanchés comme dans les figures dans les trous 492 des dissipateurs 16 et présentent une tête et un pied de diamètre réduit emmanchés respectivement dans les trous 520 et 521. Un épaulement est ainsi formé à la faveur du changement de diamètre. La tête et le pied du manchon formant entretoise sont après traversée des trous 520, 521 déformés à chaud pour être élargis respectivement au contact de la face frontale du couvercle 26 et de la face dorsale de la partie inférieure 27 en sorte que l'on réalise une opération de rivetage.

Grâce au manchons 292 formant entretoise on réalise aisément un dispositif de redressement de courant 25 formant un ensemble unitaire.

Dans tous les cas le manchon 292 constitue un organe d'assemblage des deux parties du boîtier soit par frottement, soit par fixation.

Ces manchons 292, emmanchés dans les trous des 492, sont dans tous les cas des manchons de centrage des dissipateurs 16 des modules 100.

En variante le nombre de manchons 292 et donc le nombre d'organes de fixation est inférieur au nombre de logement. Les trous 250, 251 ne sont plus nécessaires au niveau des logements dépourvus de manchon 292.

Ces manchons peuvent être rallongés axialement pour porter en surélévation le dispositif 25 par rapport au fond 56 du palier concerné.

Bien entendu le manchon 292 est en variante métallique en étant revêtu sur chacune de ses faces d'un revêtement en matière électriquement isolante.

L'obtention d'un dispositif unitaire de redressement de courant est obtenu en variante par encliquetage du couvercle 26 avec la partie inférieure 27.
Par exemple l'une des parties 26, 27 présente des pattes saillantes avec un crochet doté d'un épaulement. Ces pattes traversent un trou de l'autre partie pour venir en prise par leur crochet épaulé avec le bord du trou concerné.
Toute autre liaison par coopération de formes est envisageable. Par exemple cette liaison peut être réalisée par pincement d'une saillie.

On appréciera que les saillies 621, constituant des bossages, permettent de diminuer le nombre d'organes de fixation et rigidifient les cloisons 30 et que la liaison par coopération de forme entre les cloisons 30 et la paroi 129 de la partie inférieure 27 et les rainures 329, 330 du couvercle 26 procure une bonne isolation électrique des modules 100.
On appréciera également que la borne 70 est configurée pour laisser un maximum de place à l'ensemble 14 régulateur de tension 61- porte balai 60.

Le dispositif 25 à boîtier 26, 27 permet de refroidir les éléments de redressement de courant 93, 94 des modules de la même manière, c'est-à-dire de manière plus uniforme que dans une solution précitée de l'art antérieur à support positif.

Le régulateur de tension 61 est également mieux refroidit, sachant que le circuit intégré de celui-ci est plus critique du point de vue température de fonctionnement que les éléments de redressement de courant. Le régulateur peut travailler à des températures plus élevées.
Il en est d'autant plus ainsi que le boîtier 26, 27 isole thermiquement l'ensemble 14 par rapport aux modules 100 en sorte que l'ensemble 14 est mieux isoler thermiquement par rapport au dispositif 25 et donc peu réchauffer par celui-ci.

On appréciera que le connecteur supérieur 26 permet, grâce à ses traces 400, 401, de délivrer aux bornes 502, 503 du régulateur une information précise sur la différence de potentiel entre deux phases de la machine électrique tournante.

On appréciera la compacité de la borne 70 et de l'ensemble 14 car la borne 70 prolonge circonférentiellement l'une des extrémités circonférentielle du boîtier et permet l'implantation de l'ensemble 14 dans le dégagement 28, 29 entre les extrémités circonférentielles du boîtier et la borne 70 comme mieux visible à la figure 3.
Plus précisément le corps 72 de la borne 70 s'étend perpendiculairement au fond 56 du palier ce qui permet de réduire l'encombrement circonférentiel et de laisser plus de place circonférentiellement au boîtier 26, 27

Le corps 66 de l'ensemble comporte un tronçon de liaison entre les deux extrémités libres du boîtier. Ce tronçon s'étend selon une corde par rapport à la périphérie externe du palier 50 et comporte à ses extrémités les pattes de fixation 62, 64. Ce tronçon est perpendiculaire au fond 56 du palier 50 et permet de réduire l'encombrement circonférentiel de l'ensemble 14.
Cet ensemble 14 est implanté entre le boîtier 26, 27 et la borne 70.
Dans le mode de réalisation de la figure 3, le dissipateur 65 est implanté en dessous de la patte 64, de l'oreille 62 et de la plage 63. Les faces frontales de la patte 64, de la plage 63 et de l'oreille 62 sont globalement dans le même plan. Ce plan, et donc ces faces frontales, s'étendent en surélévation par rapport à la face frontale du dissipateur 65.

Dans le mode de réalisation des figures 26 et 27 les faces frontales de la plage 63 et de l'oreille 62 s'étendent en surélévation par rapport à la face frontale de la patte 64 et sont globalement dans le même plan que la face frontale du dissipateur 65.

Bien entendu la partie supérieure 26 en variante ne forme pas un couvercle pour la partie inférieure 27.
Cette partie 26 recouvre uniquement la périphérie externe de la partie inférieure 27 et comporte en son sein les traces 320, 400, 401. Cette partie comporte bien entendu les protubérances 252, ici en forme d'oreilles 252 trouées en 520.
L'ouverture 151 de cette partie est modifiée car dans ce mode de réalisation on supprime les bras 132 et la paroi 229.
Dans ce cas on augmente la hauteur des cloisons 30 et de la paroi 129 pour que celle-ci correspondent au moins à la hauteur du boîtier 26, 27 des figures précédentes pour bien isoler les modules 100.
La partie supérieure 26 est donc simplifiée.
Dans tous les cas les parties 26, 27 sont ajourées en correspondance.

L'une des ouvertures 151 n'est donc pas forcément de forme trapézoïdale et consiste en variante en l'ouverture centrale de la partie supérieure 26 de forme globalement annulaire avec présence des protubérances internes 252.

Dans tous les cas la partie supérieure 26 et la partie inférieure 27 présentent des ouvertures en correspondance au niveau d'un logement d'un module 100 pour que l'air traverse les passages axiaux du dissipateur de chaleur.

Les cas les parties 26, 27 sont donc ajourées en correspondance au niveau de chaque logement 600.

La partie supérieure 26 forme dans tous les cas un couvercle pour la partie externe de la partie inférieure ainsi qu'un couvercle de protection des éléments de redressement de courant 93, 94 des modules implantés entre le fond 21 et la partie 26.

Dans les figures la borne 70 est selon une caractéristique distincte de l'ensemble régulateur de tension porte-balais.

## Revendications

1. Ensemble monobloc (14) régulateur de tension (61) - porte balais (60) pour machine électrique tournante polyphasée, notamment un alternateur ou un alterno-démarreur de véhicule automobile, comportant un circuit intégré appartenant au régulateur de tension (61), un porte-balais (60) doté de balais montés dans des logements et un corps (66) en matière électriquement isolante configuré pour porter en saillie un dissipateur de chaleur (65) comprenant une pluralité de passages axiaux destinés à être traversés axialement par un fluide de refroidissement, tel que de l'air, **caractérisé en ce que** son corps (66) est globalement en forme de T, **en ce que** la partie centrale du T porte le porte-balais (60), **en ce que** les logements des balais sont réalisés dans la partie centrale du T, **en ce que** l'une des ailes du T, dite première aile, d'une part, porte un logement pour le circuit intégré et d'autre part, porte en saillie le dissipateur de chaleur (65), **en ce qu'**une embase solidaire du dissipateur de chaleur (65) pénètre dans le logement du circuit intégré pour être en contact thermique avec ledit circuit intégré et **en ce que** le dissipateur (65) comporte une pluralité d'ailettes fines parallèles aux logements des balais pour formation des passages axiaux.

2. Ensemble selon la revendication 1, **caractérisé en ce que** les ailes du T s'étendent globalement perpendiculairement au porte-balais (60).

3. Ensemble selon la revendication 1 ou 2, **caractérisé en ce que** les ailes du T ont des longueurs inégales.

4. Ensemble selon l'une quelconque des revendications précédentes, **caractérisé en ce que** l'embase est en forme d'équerre et présente une partie d'orientation axiale solidaire du dissipateur (65) et une partie d'orientation transversale pénétrant dans un logement (161) du corps (66) pour être en contact avec le circuit intégré du régulateur (61).

5. Ensemble selon l'une quelconque des revendications précédentes, **caractérisé en ce que** le logement (161) s'étend parallèlement aux ailes du corps (66).

6. Ensemble selon l'une quelconque des revendications 1 à 4, **caractérisé en ce que** le logement (161) s'étend perpendiculairement aux ailes du corps (66).

7. Ensemble selon l'une quelconque des revendications précédentes, **caractérisé en ce que** la première aile présente à son extrémité une patte (64) présentant dorsalement deux bornes d'entrée reliées électriquement au circuit intégré pour des prises d'informations sur deux phases de la machine électrique.

8. Ensemble selon l'une quelconque des revendications précédentes, **caractérisé en ce que** l'autre aile du T, dite seconde aile, porte à son extrémité libre une oreille trouée (62) pour liaison électrique du circuit intégré du régulateur (60) à la borne positive de la batterie et **en ce que** cette seconde aile présente également une plage plane trouée (63) pour liaison électrique du circuit intégré du régulateur avec la masse.

9. Ensemble selon l'une quelconque des revendication précédentes, **caractérisé en ce que** l'embase est fixée par surmoulage dans le corps (66) de l'ensemble monobloc (14) .

10. Ensemble selon l'une quelconque des revendication précédentes, **caractérisé en ce que** les ailettes sont transversalement de longueur inégale.

11. Machine électrique tournante à ventilation interne, comportant un palier (50) ajouré, **caractérisée en ce que** le palier porte un ensemble monobloc (14) régulateur de tension (61)- porte balais (61) selon l'une quelconque des revendications précédentes.

12. Machine selon la revendication 10, **caractérisée en ce que** le dissipateur (65) comporte une pluralité d'ailettes fines pour formation des passages axiaux.

13. Machine électrique tournante à ventilation interne, comportant un palier (50) ajouré, **caractérisée en ce que** le palier porte un ensemble monobloc (14) régulateur de tension (61)- porte balais (61) selon la revendication 10 ou 11 et **en ce que** le palier présente un fond (56) globalement d'orientation transversale, qui porte une première cheminée (156) axialement saillante pour fixation de la patte (64) de l'ensemble (14) et une deuxième cheminée axialement saillante pour fixation de la plage (63) de l'ensemble (14).

14. Machine selon la revendication 12, **caractérisée en ce que** le fond (56) du palier (50) porte un corps (72) appartenant à une borne (70) de liaison avec la borne positive de la batterie et **en ce que** l'oreille (62) de l'ensemble est destinée à être fixée au corps (72).

15. Machine selon la revendication 13, **caractérisée en ce que** le palier (50) présente un fond (56) globalement d'orientation transversale, qui porte un dispositif de redressement de courant (25) comprenant au moins deux modules de redressement de courant (100) chacun d'une phase de la machine, **en ce que** ledit dispositif comporte un boîtier (26, 27) en matière électriquement isolante, **en ce que** le boîtier est ajouré axialement et doté d'une pluralité de logements transversaux , **en ce qu'**au moins deux des logements (600) sont dédiés à la réception d'un module de redressement de courant (100) et **en ce que** le boîtier présente deux extrémités circonférentielles cloisonnées délimitant un dégagement (28, 29) pour le logement de ensemble (14) régulateur de tension (61)-porte balais (60) et de la borne de liaison (70) avec la borne positive d'une batterie.

## Patentansprüche

1. Monoblockanordnung (14) aus Spannungsregler (61) und Bürstenträger (60) für eine Mehrphasen-Elektrodrehmaschine, insbesondere einen Generator oder einen Starter-Generator für ein Kraftfahrzeug, umfassend einen zum Spannungsregler (61) gehörenden integrierten Kreis, einen mit in Aufnahmen montierten Bürsten ausgestatteten Bürstenträger (60) und einen zum Tragen eines Wärmeableiters (65) umfassend eine Vielzahl von zum axialen Durchquertwerden von einem Kühlfluid wie Luft vorgesehenen axialen Durchgängen aufliegend ausgebildeten Träger (66) aus einem elektrisch isolierenden Material, **dadurch gekennzeichnet, dass** sein Körper (66) im Wesentlichen T-förmig ist, dass der Mittelteil des Ts den Bürstenträger (60) trägt, dass die Aufnahmen der Bürsten im Mittelteil des Ts ausgeführt sind, dass einer der Flügel des Ts, der sogenannte erste Flügel, einerseits eine Aufnahme für den integrierten Kreis trägt und andererseits aufliegend den Wärmeableiter (65) trägt, dass ein mit dem Wärmeableiter (65) verbundener Sockel in die Aufnahme des integrierten Kreises eindringt, um in thermischem Kontakt mit dem integrierten Kreis zu stehen und dass der Ableiter (65) eine Vielzahl von dünnen Rippen parallel zu den Aufnahmen der Bürsten zur Bildung von axialen Durchgängen umfasst.

2. Anordnung nach Anspruch 1, **dadurch gekennzeichnet, dass** die Flügel des Ts sich im Wesentlichen senkrecht zum Bürstenträger (60) erstrecken.

3. Anordnung nach Anspruch 1 oder 2, **dadurch gekennzeichnet, dass** die Flügel des Ts ungleiche Längen aufweisen.

4. Anordnung nach einem der vorhergehenden Ansprüche, **dadurch gekennzeichnet, dass** der Sockel winkelförmig ist und einen mit dem Ableiter (65) verbundenen Axialausrichtungsteil und einen in eine Aufnahme (161) des Körpers (66) eindringenden Querausrichtungsteil, um mit dem integrierten Kreis des Reglers (61) in Kontakt zu sein, aufweist.

5. Anordnung nach einem der vorhergehenden Ansprüche, **dadurch gekennzeichnet, dass** sich die Aufnahme (161) parallel zu den Flügeln des Körpers (66) erstreckt.

6. Anordnung nach einem der Ansprüche 1 bis 4, **dadurch gekennzeichnet, dass** sich die Aufnahme (161) senkrecht zu den Flügeln des Körpers (66) erstreckt.

7. Anordnung nach einem der vorhergehenden Ansprüche, **dadurch gekennzeichnet, dass** der erste Flügel an seinem Ende eine dorsal zwei elektrisch mit dem integrierten Kreis verbundene Eingangsklemmen für die Aufnahme von Informationen auf zwei Phasen der Elektromaschine aufweisende Lasche (64) aufweist.

8. Anordnung nach einem der vorhergehenden Ansprüche, **dadurch gekennzeichnet, dass** der andere Flügel des Ts, der sogenannte zweite Flügel, an seinem freien Ende eine gelochte Öse (62) zum elektrischen Verbinden des integrierten Kreises des Reglers (60) mit dem Pluspol der Batterie trägt und dass dieser zweite Flügel ebenfalls einen gelochten flachen Bereich (63) zum elektrischen Verbinden des integrierten Kreises des Reglers mit der Masse aufweist.

9. Anordnung nach einem der vorhergehenden Ansprüche, **dadurch gekennzeichnet, dass** der Sockel durch Umspritzen im Körper (66) der Monoblockanordnung (14) befestigt ist.

10. Anordnung nach einem der vorhergehenden Ansprüche, **dadurch gekennzeichnet, dass** die Rippen quer eine ungleiche Länge aufweisen.

11. Elektrodrehmaschine mit Innenlüftung, umfassend ein gelochtes Lager (50), **dadurch gekennzeichnet, dass** das Lager eine Monoblockanordnung (14) aus Spannungsregler (61) und Bürstenträger (60) nach einem der vorhergehenden Ansprüche trägt.

12. Maschine nach Anspruch 11, **dadurch gekennzeichnet, dass** der Ableiter (65) eine Vielzahl von dünnen Rippen zur Bildung von axialen Durchgängen umfasst.

13. Elektrodrehmaschine mit Innenlüftung, umfassend ein gelochtes Lager (50), **dadurch gekennzeichnet, dass** das Lager eine Monoblockanordnung (14) aus Spannungsregler (61) und Bürstenträger (60) nach einem der vorhergehenden Ansprüche trägt und dass das Lager einen Boden (56) mit im Wesentlichen Querausrichtung aufweist, der einen axial vorstehenden ersten Weg (156) zum Befestigen der Lasche (64) der Anordnung (14) und einen axial vorstehenden zweiten Weg zum Befestigen des Bereichs (63) der Anordnung (14) trägt,

14. Maschine nach Anspruch 13, **dadurch gekennzeichnet, dass** der Boden (56) des Lagers (50) einen zu einer Klemme (70) zum Verbinden mit dem Pluspol der Batterie gehörenden Körper (72) trägt und dass die Lasche (62) der Anordnung zum Befestigen am Körper (72) vorgesehen ist.

15. Maschine nach Anspruch 14, **dadurch gekennzeichnet, dass** das Lager (50) einen Boden (56) mit im Wesentlichen Querausrichtung aufweist, der eine Stromgleichricht-Vorrichtung (25) umfassend wenigstens zwei Stromgleichricht-Module (100) von jeweils einer Phase der Maschine trägt, dass die Vorrichtung ein Gehäuse (26, 27) aus elektrisch isolierendem Material umfasst, dass das Gehäuse axial gelocht und mit einer Vielzahl von Queraufnahmen ausgestattet ist, dass wenigstens zwei der Aufnahmen (600) zur Aufnahme eines Stromgleichricht-Moduls (100) ausgebildet sind und dass das Gehäuse zwei am Umfang getrennte Enden zum Abgrenzen einer Aussparung (28, 29) für die Aufnahme der Anordnung (14) aus Spannungsregler (61) und Bürstenträger (60) und der Anschlussklemme (70) für den Pluspol einer Batterie aufweist.

## Claims

1. One-piece voltage regulator (61) - brush-holder (60) assembly (14) for multi-phase rotating electric machine, in particular an alternator or an alternator-starter of a motor vehicle, comprising an integrated circuit belonging to the voltage regulator (61), a brush-holder (60) provided with brushes mounted in housings and a body (66) made of electrically insulating material configured to protrudingly bear a heat sink (65) comprising a plurality of axial passages intended to be passed through axially by a coolant, such as air, **characterized in that** its body (66) is overall T-shaped, **in that** the central part of the T bears the brush-holder (60), **in that** the housings of the brushes are produced in the central part of the T, **in that** one of the wings of the T, called first wing, on the one hand, bears a housing for the integrated circuit and, on the other hand, protrudingly bears the heat sink (65), **in that** a base secured to the heat sink (65) penetrates into the housing of the integrated circuit to be in thermal contact with said integrated circuit and **in that** the heat sink (65) comprises a plurality of thin fins parallel to the housings of the brushes to form the axial passages.

2. Assembly according to Claim 1, **characterized in that** the wings of the T extend overall at right angles to the brush-holder (60).

3. Assembly according to Claim 1 or 2, **characterized in that** the wings of the T have unequal lengths.

4. Assembly according to any one of the preceding claims, **characterized in that** the base is in the form of a bracket and has a part of axial orientation secured to the heat sink (65) and a part of transverse orientation penetrating into a housing (161) of the body (66) to be in contact with the integrated circuit of the regulator (61).

5. Assembly according to any one of the preceding claims, **characterized in that** the housing (161) extends parallel to the wings of the body (66).

6. Assembly according to any one of Claims 1 to 4, **characterized in that** the housing (161) extends at right angles to the wings of the body (66).

7. Assembly according to any one of the preceding claims, **characterized in that** the first wing has, at its end, a tab (64) having, dorsally, two input terminals electrically linked to the integrated circuit for obtaining information on two phases of the electric machine.

8. Assembly according to any one of the preceding claims, **characterized in that** the other wing of the T, called second wing, bears, at its free end, a holed lug (62) for electrically linking the integrated circuit of the regulator (61) to the positive terminal of the battery and **in that** this second wing also has a holed flat land (63) for electrically linking the integrated circuit of the regulator with the ground.

9. Assembly according to any one of the preceding claims, **characterized in that** the base is fixed by overwelding in the body (66) of the one-piece assembly (14).

10. Assembly according to any one of the preceding claims, **characterized in that** the fins are transversely of unequal length.

11. Internally-cooled rotating electric machine, comprising an openwork bearing (50), **characterized in that** the bearing bears a one-piece voltage regulator (61) - brush-holder (60) assembly (14) according to any one of the preceding claims.

12. Machine according to Claim 11, **characterized in that** the heat sink (65) comprises a plurality of thin fins for the formation of axial passages.

13. Internally-cooled rotating electric machine, comprising an openwork bearing (50), **characterized in that** the bearing bears a one-piece voltage regulator (61) - brush-holder (60) assembly (14) according to any one of the preceding claims, and **in that** the bearing has a bottom (56) of overall transverse orientation, which bears a first axially protruding chimney (156) for fixing the tab (64) of the assembly (14) and a second axially protruding chimney for fixing the land (63) of the assembly (14).

14. Machine according to Claim 13, **characterized in that** the bottom (56) of the bearing (50) bears a body (72) belonging to a terminal (70) linking with the positive terminal of the battery and **in that** the lug (62) of the assembly is intended to be fixed to the body (72).

15. Machine according to Claim 14, **characterized in that** the bearing (50) has a bottom (56) of overall transverse orientation, which bears a current rectifying device (25) comprising at least two current rectifying modules (100) each of one phase of the machine, **in that** said device comprises a casing (26, 27) of thermally insulating material, **in that** the casing is openworked axially and provided with a plurality of transverse housings, **in that** at least two of the housings (600) are dedicated to receiving a current rectifying module (100) and **in that** the casing has two partitioned circumferential ends delimiting a clearance (28, 29) for housing the voltage regulator (61) - brush-holder (60) assembly (14) and the terminal (70) linking with the positive terminal of a battery.
